# EUROPÄISCHE PATENTSCHRIFT

(11) **EP 1 814 391 B1**
(45) Veröffentlichungstag und Bekanntmachung des Hinweises auf die Patenterteilung: **03.08.2016**
(21) Anmeldenummer: 05797315.8
(22) Anmeldetag: 06.10.2005
(51) Int. Cl.: A01N 43/653, A01N 31/08, A01N 43/78, C04B 26/32, C04B 24/12, C09D 5/14, C09D 5/34, C08K 5/00, C09K 3/10, D21H 21/36

(54) **SCHIMMEL-BESTÄNDIGE BAUSTOFFE**
MOLD-RESISTANT CONSTRUCTION MATERIALS
MATERIAUX DE CONSTRUCTION RESISTANTS A LA MOISISSURE

(30) Priorität: 22.11.2004 DE 102004056362
(43) Veröffentlichungstag der Anmeldung: 08.08.2007
(73) Patentinhaber: Henkel AG & Co. KGaA, 40589 Düsseldorf (DE)
(72) Erfinder: WEIDE, Mirko, 40223 Düsseldorf (DE); BOLTE, Andreas, 40627 Düsseldorf (DE); FREY, Stefan, 67146 Deidesheim (DE); GERKE, Thomas, 41468 Neuss (DE); SCHUNK, Achim, 40593 Düsseldorf (DE)
(86) Internationale Anmeldenummer: PCT/EP2005/010758
(87) Internationale Veröffentlichungsnummer: WO 2006/056266

(56) Entgegenhaltungen:
- EP-A- 0 254 857
- EP-A- 0 931 811
- WO-A-96/36739
- WO-A-03/051124
- WO-A-03/051125
- DE-A1- 3 116 607
- DE-A1- 10 146 189
- DE-A1- 19 747 765
- FR-A- 2 802 771
- US-A- 4 247 442
- US-A- 6 008 290
- DATABASE WPI Section Ch, Week 198210 Derwent Publications Ltd., London, GB; Class A26, AN 1982-18757E XP002362273 & JP 57 018758 A (SHINETSU CHEM IND CO LTD) 30. Januar 1982 (1982-01-30)
- DATABASE WPI Section Ch, Week 199223 Derwent Publications Ltd., London, GB; Class A11, AN 1992-188689 XP002362274 & JP 04 122781 A (NIPPON KAGAKU TORYO KK) 23. April 1992 (1992-04-23)
- DATABASE WPI Section Ch, Week 198610 Derwent Publications Ltd., London, GB; Class A11, AN 1986-065463 XP002362275 & JP 61 016972 A (YG TSP) 24. Januar 1986 (1986-01-24)

## Beschreibung

Die vorliegende Erfindung betrifft schimmel-beständige Baustoffe und Bauhilfsstoffe, die sich dadurch auszeichnen, dass sie ein Azol, gegebenenfalls in Kombination mit einem Sporulationsinhibitor und/oder mit einer gegenüber Mikroorganismen anti-adhäsiv wirksamen Substanz enthalten.

Silikon-, Acrylat- und andere Fugendichtungsmassen weisen, insbesondere bei Anwendung in Feuchtbereichen, wie z.B. Badezimmer im Haushalt, Duschkabinen, etc., häufig Schimmel-bedingte Verfärbungen auf. Diese meist schwarzen oder farbigen Beläge lassen sich nur schwer oder oftmals gar nicht entfernen. Im Normalfall müssen diese befallenen Dichtmassen dann mechanisch entfernt und erneuert werden. Ähnliches gilt für andere Bau- oder Bauhilfsstoffe und andere Materialien wie Filtermedien, Textilien, Pelze, Papier, Fellen oder Leder, die Feuchtigkeit ausgesetzt sind und nur unzureichend gelüftet werden.

Fugendichtungsmassen werden, um derartige Schimmelbeläge in den ausgehärteten Massen zu verhindern, normalerweise mit Fungiziden ausgerüstet. Als Fungizid wird beispielsweise DCOIT eingesetzt. Die Verwendung von Fungiziden wie DCOIT ist jedoch nicht ausreichend, um die Fugendichtungsmassen dauerhaft frei von Schimmel-bedingten Verfärbungen zu halten. Die eingesetzten Biozide werden nach relativ kurzer Zeit ausgewaschen und Schimmelpilze können an der Oberfläche der Fugendichtungsmasse wachsen. Es stellt hierbei ein generelles Problem dar, dass gut wirksame Fungizide nach relativ kurzer Zeit ausgewaschen werden, während weniger leicht auswaschbare Fungizide keine ausreichende Aktivität aufweisen. Auch für andere Baustoffe, Bauhilfsstoffe und die anderen genannten Materialien konnte eine zufriedenstellende Lösung bislang nicht gefunden werden.

Aufgabe der vorliegenden Erfindung war es daher, die Ausrüstung von Baustoffen, Bauhilfsstoffen, Filtermedien, Textilien, Pelzen, Papier, Fellen oder Leder mit Substanzen zu ermöglichen, die die genannten Stoffe und Materialien längere Zeit von Schimmel-bedingten Verfärbungen freihalten als die heute herkömmlicherweise verwendeten Fungizide.

Überraschenderweise wurde nun festgestellt, dass Azol-Verbindungen in hohen Konzentrationen dazu in der Lage sind, diese Aufgabe zu erfüllen, ohne dass weitere Fungizide hinzugegeben werden müssen, wobei Tebuconazol sich als besonders wirksame Verbindung herausgestellt hat.

Die fungiziden Eigenschaften von Azol-Verbindungen sind im Stand der Technik bereits offenbart. Für Tebuconazol wird hierbei in erster Linie die Verwendung in Holzschutzmitteln und in Pflanzenschutzmitteln, insbesondere für den Getreide- und Weinanbau, beschrieben.

EP1035159B1 beschreibt Organopolysiloxan-Zusammensetzungen, die neben Organopolysiloxanen und Silanen als antibakterielle Substanz eine EisenVerbindung enthalten und des weiteren eine Triazolgruppen-haltige Verbindung enthalten können.

EP0931811A1 beschreibt Organopolysiloxan-Zusammensetzungen, die neben Organopolysiloxanen und Silanen eine Triazol-Gruppen haltige Verbindung und eine anorganische antibakterielle Substanz enthalten.

EP0881265A2 beschreibt Organopolysiloxan-Zusammensetzungen, die neben Organopolysiloxanen und Silanen eine Triazol-Gruppen haltige Verbindung und Zink(2-Pyridylthio-1-oxid) enthalten.

JP2003238301 beschreibt Dichtungsmassen, die verschiedene Kombinationen von fungiziden Substanzen enthalten können.

DE 31 16 607 A1 beschreibt die Verwendung bestimmter Azol-Verbindungen zum Schutz nicht-lebender organischer Substrate gegen den Befall durch Mikroorganismen.

US 4,247,442 A beschreibt Organopolysiloxan-Zusammensetzungen, die neben Organopolysiloxanen und einer Organosiliziumverbindung mit wenigstens drei hydrolysierbaren Gruppen je Molekül, 2-(4-Thiazolyl)benzimidazol und ein organischen oberflächenaktiven Mittel enthalten.

EP 0 254 857 A2 beschreibt die Verwendung von 1-Aryl-3-hydroxy-3-alkyl-4-(1,2,4-triazol-1-y1)-butan-derivaten als Wirkstoffe in mikrobioziden Mitteln zum Schutz technischer Materialien.

WO 96/36739 A1 beschreibt die Verwendung von Wirkstoffkombinationen aus phenolischen Wirkstoffen mit Azolverbindungen zur Konservierung von tierischen Häuten und Leder.

US 6,008,290 A beschreibt Organopolysiloxan-Zusammensetzungen enthaltend Organopolysiloxane, mindestens ein hydrolysierbares Organosilan und eine Verbindung, die eine Triazolylgruppe enthält.

JP 57 018758 A beschreibt Organopolysiloxan-Zusammensetzungen enthaltend Organopolysiloxane, eine Organosiliziumverbindung mit wenigstens drei hydrolysierbaren Gruppen und eine Organosiliziumverbindung mit wenigstens einer Guanidylgruppe.

Die erfindungsgemäß aufgefundenen vorteilhaften Eigenschaften und Anwendungen von 0,1 bis 1 Gew.-% mindestens einer Azol-Verbindung, ausgewählt aus Propiconazol, Thiabendazol und Tebuconazol und/oder ihren Derivaten, in Kombination mit 0,0001 bis 0,05 Gew.-% mindestens eines Sporulationsinhibitors, ausgewählt aus ortho-Phenylphenol und ortho-Phenylphenol-Kieselsäureester, und mit 0,001 bis 10 Gew.-% mindestens einer anti-adhäsiv wirksamen Substanz, ausgewählt aus nichtionischen Tensiden und Kieselsäureestern davon, in Baustoffen und Bauhilfsstoffen wird durch den Stand der Technik jedoch nicht vorweggenommen.

Des weiteren wurde erfindungsgemäß festgestellt, dass durch Kombination einer Azol-Verbindung mit einem Sporulationsinhibitor und mit einer gegenüber Mikroorganismen anti-adhäsiv wirksamen Substanz eine weitere Verbesserung hinsichtlich der Schimmel-freien Zeit bzw. der verfärbungsfreien Zeit erreicht werden kann.

Ferner wurde festgestellt, dass durch Verwendung von Träger-gebundenen Formen der genannten Wirkstoffe, also der Azol-Verbindungen, der Sporulationsinhibitoren und der anti-adhäsiv wirksamen Substanzen noch eine weitere Verbesserung hinsichtlich der Schimmel-freien bzw. verfärbungsfreien Zeit erreicht werden kann, wobei sich als Träger-gebundene Formen insbesondere Kieselsäureester der Wirkstoffe als besonders vorteilhaft herausgestellt haben.

Gegenstand der vorliegenden Erfindung ist daher die Verwendung von 0,1 bis 1 Gew.-% mindestens einer Azol-Verbindung, ausgewählt aus Propiconazol, Thiabendazol und Tebuconazol und/oder ihren Derivaten, 0,0001 bis 0,05 Gew.-% mindestens eines Sporulationsinhibitors, ausgewählt aus ortho-Phenylphenol und ortho-Phenylphenol-Kieselsäureester, und 0,001 bis 10 Gew.-% mindestens einer anti-adhäsiv wirksamen Substanz, ausgewählt aus nichtionischen Tensiden und Kieselsäureestern davon, zur Ausrüstung von Materialien ausgewählt aus Baustoffen, Bauhilfsstoffen, Filtermedien, Textilien, Pelzen, Papier, Fellen oder Leder, wobei die genannten Wirkstoffe gegebenenfalls in Träger-gebundener Form, insbesondere in Form ihrer Kieselsäureester, eingesetzt werden, und wobei in einer bevorzugten Ausführungsform die Verwendung ohne Zusatz anorganischer Fungizide erfolgt und besonders bevorzugt die Azol-Verbindung die einzige verwendete funigzide Verbindung darstellt.

Gegenstand der vorliegenden Erfindung sind daher auch Materialien ausgewählt aus Baustoffen, Bauhilfsstoffen, Filtermedien, Textilien, Pelzen, Papier, Fellen oder Leder, dadurch gekennzeichnet, dass sie 0,1 bis 1 Gew.-% mindestens einer Azol-Verbindung, ausgewählt aus Propiconazol, Thiabendazol und Tebuconazol und/oder ihren Derivaten, 0,0001 bis 0,05 Gew.-% mindestens eines Sporulationsinhibitors, ausgewählt aus ortho-Phenylphenol und ortho-Phenylphenol-Kieselsäureester, und 0,001 bis 10 Gew.-% mindestens einer anti-adhäsiv wirksamen Substanz, ausgewählt aus nichtionischen Tensiden oder Kieselsäureester davon, enthalten, wobei die genannten Wirkstoffe gegebenenfalls in Träger-gebundener Form, insbesondere in Form ihrer Kieselsäureester, eingesetzt wurden, und wobei in einer bevorzugten Ausführungsform die Materialien frei von anorganischen Fungiziden sind und besonders bevorzugt die Azol-Verbindung die einzige enthaltene fungizide Verbindung darstellt.

Die Ausrüstung des Papiers, der Textilien, von Wandbehangsstoffen, Pelzen, Fellen oder Leder erfolgt in dem Fachmann bekannter Weise, beispielsweise durch Eintauchen des Papiers oder der Textilien, Pelze, Felle oder Leder in eine geeignet konzentrierte Lösung von 0,1 bis 1 Gew.-% mindestens einer Azol-Verbindung, ausgewählt aus Propiconazol, Thiabendazol und Tebuconazol und/oder ihren Derivaten, 0,0001 bis 0,05 Gew.-% mindestens einem Sporulationsinhibitor, ausgewählt aus ortho-Phenylphenol und ortho-Phenylphenol-Kieselsäureester, und 0,001 bis 10 Gew.-% mindestens einer anti-adhäsiv wirksamen Substanz, ausgewählt aus nichtionischen Tensiden und Kieselsäureestern davon.

Die Ausrüstung der Filtermedien, Baustoffe oder Bauhilfsstoffe erfolgt beispielsweise durch mechanisches Einarbeiten oder Aufbringen einer geeignet konzentrierten Lösung von 0,1 bis 1 Gew.-% mindestens einer Azol-Verbindung, ausgewählt aus Propiconazol, Thiabendazol und Tebuconazol und/oder ihren Derivaten, 0,0001 bis 0,05 Gew.-% mindestens eines Sporulationsinhibitors, ausgewählt aus ortho-Phenylphenol und ortho-Phenylphenol-Kieselsäureester, und 0,001 bis 10 Gew.-% mindestens einer anti-adhäsiv wirksamen Substanz, ausgewählt aus nichtionischen Tensiden und Kieselsäureestern davon, in bzw. auf die Filtermedien, Baustoffe oder Bauhilfsstoffe. Die Wirkstoffe und Lösungen der Wirkstoffe, vorzugsweise in organischen Lösungsmitteln, können vorteilhafterweise besonders gut auf bzw. in solche Bau- und Bauhilfsstoffe aufgebracht bzw. eingearbeitet werden. Eine nachträgliche Ausrüstung der Bau- bzw. Bauhilfsstoffe oder eine Wiederaufladung nach längerem Gebrauch bereits ausgerüsteter Bau- bzw. Bauhilfsstoffe, beispielsweise bei Dichtungsmassen, durch Auftragen von 0,1 bis 1 Gew.-% mindestens einer Azol-Verbindung, ausgewählt aus Propiconazol, Thiabendazol und Tebuconazol und/oder ihren Derivaten, 0,0001 bis 0,05 Gew.-% mindestens eines Sporulationsinhibitors, ausgewählt aus ortho-Phenylphenol und ortho-Phenylphenol-Kieselsäureester, und 0,001 bis 10 Gew.-% mindestens einer anti-adhäsiv wirksamen Substanz, ausgewählt aus nichtionischen Tensiden und Kieselsäureestern davon, ist daher gegebenenfalls möglich.

Bereits die Verwendung von Azol-Verbindungen in hoher Konzentration als alleinigem Wirkstoff bewirkt überraschenderweise eine deutliche Verbesserung der Schimmel-freien Zeit gegenüber den heute üblicherweise verwendeten Fungiziden wie DCOIT. Überraschend war hierbei des weiteren, dass insbesondere bei Verwendung von Tebuconazol mit zunehmender Konzentration in nahezu linearer Abhängigkeit ein weiter zunehmender Schutz vor Schimmel erreicht werden konnte, während dies bei Verwendung heute üblicherweise in Dichtungsmassen verwendeten Fungiziden nicht beobachtet werden kann. Dies war vor allem deshalb überraschend, weil eine negative Beeinflussung von Hydroxyl-Gruppen haltigen Verbindungen wie Tebuconazol und Propiconazol durch Wechselwirkung mit reaktiven Komponenten der Dichtungsmassen zu erwarten war.

Durch die Verwendung von Sporulationsinhibitoren als alleinigem Wirkstoff kann ebenfalls bereits eine Vermeidung bzw. deutliche Verminderung von Schimmel-bedingten Verfärbungen erreicht werden. Die Sporulationsinhibitoren töten den Schimmel hierbei nicht ab, sondern verhindern lediglich die asexuelle Vermehrung des Pilzes, die insbesondere die Sporulation des Pilzes und die damit einhergehenden unerwünschten, meist schwarzen Verfärbungen umfasst. Sporulationsinhibitoren sind beispielsweise in WO 03/051124 beschrieben. Als für den Einsatz in Baustoffen und/oder Bauhilfsstoffen besonders geeignet haben sich erfindungsgemäß insbesondere ortho-Phenylphenol und seine Derivate herausgestellt.

Ebenso kann durch die Verwendung von gegenüber Mikroorganismen anti-adhäsiv wirksamen Substanzen als alleinigen Wirkstoffen bereits eine Vermeidung bzw. deutliche Verminderung von Schimmelbefall erreicht werden. Die anti-adhäsiv wirksamen Substanzen töten hierbei den Schimmel ebenfalls nicht ab, sondern verhindern von vorherein, dass sich der Schimmel an den Materialien anheftet. Anti-adhäsiv wirksame Substanzen sind beispielsweise beschrieben in der WO 03/051125 beschrieben. Als für den Einsatz in Baustoffen und/oder Bauhilfsstoffen besonders geeignet hat sich erfindungsgemäß insbesondere die Verwendung von nichtionischen Tensiden herausgestellt.

Durch den Einsatz Träger-gebundener Formen der Wirkstoffe kann ein sogenannter *retarded release*-Effekt bewirkt werden: Die aktive Substanz wird in einer inaktiven Vorform bereitgestellt und nach und nach im Laufe der Zeit freigesetzt. Durch den Träger wird die aktive Form länger in der Formulierung gehalten und durch diesen gleichzeitig geschützt. Durch die allmähliche Freisetzung wird sichergestellt, dass ein zeitlich länger anhaltender Effekt erreicht wird, während die aktive freie Form aufgrund ihrer Flüchtigkeit schneller aus der Formulierung entweichen würde und bei sehr hoher Konzentration gegebenenfalls ferner zu einem intensiven Geruch führen könnte. Ferner zeichnet sich die Träger-gebundene Form dadurch aus, dass sie aufgrund ihrer physikalischen Eigenschaften, und insbesondere aufgrund ihrer Größe, in einige Formulierungen besser eingearbeitet und auf einigen Materialien besser fixiert werden kann als die freie Form der Aktivsubstanz. Durch die Bindung an einen Träger wird außerdem sichergestellt, dass bei Einsatz in hoher Konzentration gegebenenfalls die Toxizität der Substanz gering gehalten wird.

Durch die erfindungsgemäß bevorzugte Kombination von Azol-Verbindungen mit Sporulationsinhibitoren und mit anti-adhäsiv wirksamen Substanzen und/oder durch den Einsatz von Träger-gebundenen Formen mindestens einer der genannten Wirksubstanzen können die vorteilhaften Eigenschaften aller genannten Wirkstoffklassen vereint und hiermit ein synergistischer Effekt bewirkt werden: Die Anhaftung von Schimmel wird von vornherein durch die anti-adhäsiv wirksamen Substanzen vermindert, der gegebenenfalls dennoch anhaftende Schimmel wird durch die Azol-Verbindungen abgetötet und der gegebenenfalls noch überlebende Schimmel wird durch die Sporulationsinhibitoren daran gehindert unerwünschte Färbungen hervorzurufen. Außerdem können durch den Einsatz von Träger-gebundenen Formen der Wirksubstanzen die gewünschten Effekte über längere Zeit gewährleistet werden.

### Azol-Verbindung

Die erfindungsgemäß zu verwendende Azol-Verbindung ist ausgewählt aus Propiconazol, Thiabendazol und Tebuconazol und/oder ihren Derivaten und/oder aus Träger-gebundenen Formen der genannten Substanzen, wobei Tebuconazol (α-(2-(4-Chlorphenyl)ethyl)-α-(1,1-dimethylethyl)-1H-1,2,4-triazol-1-ethanol) besonders bevorzugt ist, und wobei unter Derivaten ein- oder mehrfach substituierte Formen der zuvor genannten Verbindungen zu verstehen sind, wobei die Substituenten vorzugsweise ausgewählt sind aus Halogen, insbesondere Fluor, Chlor oder Brom und Alkyl, insbesondere C₁₋₆-Alkyl, Hydroxy und Alkoxy, insbesondere C₁₋₆-Alkoxy, und wobei unter dem Begriff Azol auch die Salze der Azole mit anorganischen oder organischen Säuren zu verstehen sind.

Die Azol-Verbindung ist hierbei in einer Menge von 0,1 bis 1,0 Gew.-%, vor allem von 0,2 bis 0,6 Gew.-% in den Baustoffen und Bauhilfsstoffen enthalten. Bei Träger-gebundenen Formen der Azol-Verbindung bezieht sich die Mengenangabe auf die Menge der Aktivsubstanz.

### Sporulationsinhibitoren

Unter einem Sporulationsinhibitor ist erfindungsgemäß eine Substanz zu verstehen, die dazu in der Lage ist, die asexuelle Vermehrung von Pilzen, insbesondere von Schimmelpilzen, zu verhindern oder zumindest deutlich zu vermindern, wobei die Verminderung der asexuellen Vermehrung nicht auf einen mikrobiziden bzw. fungiziden Effekt zurückzuführen ist. Durch die Verwendung eines Sporulationsinhibitors anstelle eines Mikrobizids umgeht man das Problem der Resistenzbildung. Unter einem Sporulationsinhibitor sind hierbei auch Substanzen zu verstehen, die in höherer Konzentration mikrobizide bzw. fungizide Eigenschaften haben können, jedoch in geringerer und insbesondere in der eingesetzten Konzentration die asexuelle Vermehrung von Pilzen inhibieren, ohne mikrobizid bzw. fungizid wirksam zu sein.

Erfindungsgemäß umfaßt der Begriff asexuelle Vermehrung insbesondere Sporenbildung, Knospung und Fragmentierung. Unter Sporenbildung ist dabei sowohl die Bildung von Vermehrungsformen z.B. Konidien, Gonitocysten, Sporangiosporen, Arthrosporen, Blastosporen und deren assoziierten Organen (z.B. Konidiophoren) als auch von Dauerformen (z.B. Chlamydosporen) zu verstehen.

Durch die Hemmung der Sporulation der auswachsenden Pilzkolonien kann die Allergenbelastung und damit das Risiko einer Schimmelpilzallergie erheblich verringert und die Verbreitung des Pilzes vollständig aufgehalten bzw. beträchtlich verzögert werden. Ebenso können die mit der asexuellen Vermehrung verbundenen Verfärbungen, die auf die Sporenbildung zurückzuführen sind, stark vermindert oder vollständig verhindert werden. Die Verminderung der Ausbildung von Pilzsporen auf Materialien, die mit der betreffen Substanz ausgerüstet wurden, im Vergleich zu Materialien, die nicht entsprechend ausgerüstet wurden, beträgt vorzugsweise mehr als 50 %, besonders bevorzugt mehr als 80 %.

Der Sporulationsinhibitor ist hierbei ausgewählt aus ortho-Phenylphenol und ortho-Phenylphenol-Kieselsäureester sowie aus Träger-gebundenen Formen dieser Substanzen.

Erfindungsgemäß handelt es sich bei dem Sporulationsinhibitor um ortho-Phenylphenol und/oder um einen ortho-Phenylphenol-Kieselsäureester.

Die Konzentration von zur Hemmung der asexuellen Vermehrung von Pilzen eingesetzten Sporulationsinhibitoren in den erfindungsgemäßen Mitteln kann durch den Fachmann in einem breiten Bereich variiert werden, abhängig von den Einsatzbedingungen der Mittel.

Der Sporulationsinhibitor wird in einer Menge von 0,0001 bis 0,05 Gew.-%, vor allem in einer Menge von 0,001 bis 0,05 Gew.-%, eingesetzt. Bei Träger-gebundenen Formen des Sporulationsinhibitors bezieht sich die Mengenangabe auf die Menge der Aktivsubstanz.

### Anti-adhäsiv wirksame Substanzen

Unter einer anti-adhäsiv wirksamen Substanz ist erfindungsgemäß eine Substanz zu verstehen, die dazu in der Lage ist, die Anhaftung von Mikroorganismen, insbesondere von Pilzen, vor allem von Schimmelpilzen, zu vermindern, wobei die anti-adhäsive Wirkung vorzugsweise nicht auf einen mikrobiziden bzw. fungiziden Effekt zurückzuführen ist. Durch die Verwendung einer anti-adhäsiv wirksamen Substanz anstelle eines Mikrobizids umgeht man somit das Problem der Resistenzbildung. Die Verminderung der Anhaftung von Mkroorganismen auf Materialien, die mit der betreffenden Substanz ausgerüstet wurden, im Vergleich zu Materialien, die nicht entsprechend ausgerüstet wurden, beträgt vorzugsweise mehr als 50 %, besonders bevorzugt mehr als 80 %.

Unter einer anti-adhäsiv wirksamen Substanz sind hierbei auch Substanzen zu verstehen, die in höherer Konzentration mikrobizide bzw. fungizide Eigenschaften haben können, jedoch in geringerer und insbesondere in der eingesetzten Konzentration die Anhaftung von Mikroorganismen bzw. Pilzen inhibieren, ohne mikrobizid bzw. fungizid wirksam zu sein.

Die anti-adhäsive Wirkung kann hierbei bei Pilzen darauf zurückzuführen sein, dass die Morphogenese der Pilze beeinflusst wird.

Der Begriff Morphogenese bezeichnet die Ausbildung spezieller zellulärer Formen von Pilzen, z.B. von Hyphen, Sporen (im Sinne von Dauerformen, Verbreitungs- oder Fortpflanzungszellen) oder deren assoziierter Organe (z.B. Konidiophoren). Diese verschiedenen Formen von Pilzzellen sind entweder makroskopisch oder mikroskopisch einfach zu erkennen. Die verschiedenen zellulären Formen weisen dabei unterschiedliche Hafteigenschaften an Gewebe, Textilien etc. auf.

Unter Beeinflussung ist im erfindungsgemäßen Sinne sowohl die Hemmung des Übergangs von einer besser haftenden in eine weniger gut haftende zelluläre Form als auch die Bevorzugung bzw. bevorzugte Ausbildung einer weniger gut haftenden zellulären Form gegenüber einer besser haftenden zu verstehen.

Die anti-adhäsiv wirksamen Substanz ist hierbei ausgewählt aus nichtionischen Tensiden und/oder Kieselsäureestern davon sowie aus gekoppelten oder Träger-gebundenen Formen dieser Substanzen.

Als nichtionische Tenside werden vorzugsweise alkoxylierte, vorteilhafterweise ethoxylierte oder propoxylierte, insbesondere primäre Alkohole mit vorzugsweise 8 bis 22 C-Atomen, insbesondere 8 bis 18 C-Atomen, und durchschnittlich 1 bis 20, vorzugsweise 1 bis 12 Mol Alkylenoxid oder 5 bis 15 Mol Alkylenoxid, vorzugsweise Ethylenoxid (EO), pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 oder 5 bis 15 EO pro Mol Alkohol bevorzugt. Zu den bevorzugten ethoxylierten Alkoholen gehören beispielsweise C₁₂₋₁₄-Alkohole mit 3 EO oder 4 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Als nichtionische Tenside kommen weiterhin auch Substanzen in Betracht, die dem Fachmann gemeinhin auch als nichtionische Emulgatoren bekannt sind. Die nichtionischen Tenside in diesem Sinne enthalten als hydrophile Gruppe z. B. eine Polyolgruppe, eine Polyethergruppe, eine Polyamin- oder eine Polyamidgruppe oder eine Kombination der genannten Gruppen. Solche Verbindungen sind beispielsweise C₈-C₂₂-Alkylmono- und -oligoglycoside und deren ethoxylierte Analoga, Anlagerungsprodukte von 2 bis 30 Mol Ethylenoxid und/oder 0 bis 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe, C₁₂-C₂₂-Fettsäuremono- und -diester von Anlagerungsprodukten von 1 bis 30 Mol Ethylenoxid an Glycerin sowie Anlagerungsprodukte von 5 bis 60 Mol Ethylenoxid an Rizinusöl und an gehärtetes Rizinusöl.

Auch schwachschäumende nichtionische Tenside können eingesetzt werden, welche alternierende Ethylenoxid- und Alkylenoxideinheiten aufweisen. Unter diesen sind wiederum Tenside mit EO-AO-EO-AO-Blöcken bevorzugt, wobei jeweils eine bis zehn EO- bzw. AO-Gruppen aneinander gebunden sind, bevor ein Block aus den jeweils anderen Gruppen folgt. Beispiele hierfür sind Tenside der allgemeinen Formel 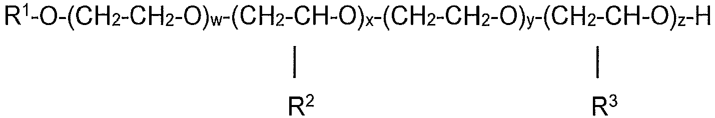 in der R¹ für einen geradkettigen oder verzweigten, gesättigten oder ein- bzw. mehrfach ungesättigten C₆₋₂₄-Alkyl- oder -Alkenylrest steht; jede Gruppe R² bzw. R³ unabhängig voneinander ausgewählt ist aus -CH₃; -CH₂CH₃, -CH₂CH₂-CH₃, CH(CH₃)₂ und die Indizes w, x, y, z unabhängig voneinander für ganze Zahlen von 1 bis 6 stehen. Diese lassen sich durch bekannte Methoden aus den entsprechenden Alkoholen R¹-OH und Ethylen- bzw. Alkylenoxid herstellen. Der Rest R¹ in der vorstehenden Formel kann je nach Herkunft des Alkohols variieren. Werden native Quellen genutzt, weist der Rest R¹ eine gerade Anzahl von Kohlenstoffatomen auf und ist in der Regel unverzeigt, wobei die linearen Resten aus Alkoholen nativen Ursprungs mit 12 bis 18 C-Atomen, z.B. aus Kokos-, Palm-, Talgfett- oder Oleylalkohol, bevorzugt sind. Aus synthetischen Quellen zugängliche Alkohole sind beispielsweise die Guerbetalkohole oder in 2-Stellung methylverzweigte bzw. lineare und methylverzweigte Reste im Gemisch, so wie sie üblicherweise in Oxoalkoholresten vorliegen. Unanbhängig von der Art des zur Herstellung der erfindungsgemäß in den Mitteln enthaltenen nicht-ionischen Tensiden eingesetzten Alkohols sind erfindungsgemäße Mittel bevorzugt, bei denen R¹ in der vorstehenden Formel für einen Alkylrest mit 6 bis 24, vorzugsweise 8 bis 20, besonders bevorzugt 9 bis 15 und insbesondere 9 bis 11 Kohlenstoffatomen steht. Als Alkylenoxideinheit, die alternierend zur Ethylenoxideinheit in den Niotensiden enthalten sein kann, kommt neben Propylenoxid insbesondere Butylenoxid in Betracht. Aber auch weitere Alkylenoxide, bei denen R² bzw. R³ unabhängig voneinander ausgewählt sind aus -CH₂CH₂-CH₃ bzw. CH(CH₃)₂, sind geeignet.

Weiterhin kommen als nichtionische Tenside nichtionische Blockcopolymere in Frage wie sie beispielsweise in WO 00/12660 beschrieben werden, auf die hier vollinhaltlich Bezug genommen wird. Es kann sich hierbei beispielsweise handeln um AB-, AA'B-, ABB'-, ABA'- oder BAB'- Blockcopolymere, wobei A und A' für einen hydrophilen Block und B und B' für einen hydrophoben Block steht. Bei den Blöcken A und A' kann es sich unabhänig voneinander beipielsweise handeln um ein Polyalkylenoxid, insbesondere um ein Polypropylenoxid oder Polyethylenoxid, um Polyvinylpyridin, Polyvinylalkohol, Polymethylvinylether, Polyvinylpyrrolidin oder um ein Polysaccharid. Bei den Blöcken B und B' kann es sich unabhängig voneinander beispielsweise handeln um einen gegebenenfalls substituierten Alkylrest, der beispielsweise erhalten werden kann durch Polymerisation von Einheiten ausgewählt aus der Gruppe bestehend aus 1,3-Butadien, Isopren, alle Konstitumere des Dimethylbutadien, 1,3-Pentadien, 2.4-Hexadien, α-Methylstyrol, Isobutylen, Ethylen, Propylen oder Styrol oder Mischungen davon. Die Molekulargewichte der Blöcke A, A', B und B' betragen vorzugsweise unabhängig voneinander zwischen 500 und 50000 g/mol. Erfindungsgemäß handelt es sich vorzugsweise bei mindestens einem der Blöcke A und A' um ein Alkylenoxid.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester.

Außerdem können als nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein.

Weitere geeignete Tenside sind Polyhydroxyfettsäureamide der nachstehenden Formel, 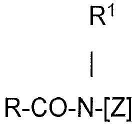 in der RCO für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel, 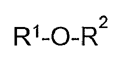 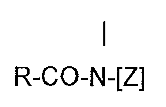 in der R für einen linearen oder verzweigten Alkyl- oder Alkenylrest mit 7 bis 12 Kohlenstoffatomen, R¹ für einen linearen, verzweigten oder cyclischen Alkylrest oder einen Arylrest mit 2 bis 8 Kohlenstoffatomen und R² für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes.

[Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können dann durch Umsetzung mit Fettsäuremethylestern in Gegenwart eines Alkoxids als Katalysator in die gewünschten Polyhydroxyfettsäureamide überführt werden.

Weitere einsetzbare nichtionische Tenside sind die endgruppenverschlossenen poly(oxyalkylierten) Tenside der Formel

R¹O[CH₂CH(R³)O]ₓ[CH₂]ₖCH(OH)[CH₂]ⱼOR²

in der R¹ und R² für lineare oder verzweigte, gesättigte oder ungesättigte, aliphatische oder aromatische Kohlenwasserstoffreste mit 1 bis 30 Kohlenstoffatomen stehen, R³ für H oder einen Methyl-, Ethyl-, n-Propyl-, iso-Propyl, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen. Wenn der Wert x ≥ 2 ist, kann jedes R³ in der obenstehenden Formel unterschiedlich sein. R¹ und R² sind vorzugsweise lineare oder verzweigte, gesättigte oder ungesättigte, aliphatische oder aromatische Kohlenwasserstoffreste mit 6 bis 22 Kohlenstoffatomen, wobei Reste mit 8 bis 18 C-Atomen besonders bevorzugt sind. Für den Rest R³ sind H, -CH₃ oder -CH₂CH₃ besonders bevorzugt. Besonders bevorzugte Werte für x liegen im Bereich von 1 bis 20, insbesondere von 6 bis 15.

In einer besonders bevorzugten Ausführungsform handelt es sich bei den nichtionischen Tensiden um ein Anlagerungsprodukt von Alkylenoxid-, insbesondere Ethylenoxid (EO)- und/oder Propylenoxid (PO)-Einheiten, an Alkylphenole, wobei der Alkylrest des Alkylphenols vorzugsweise zwischen 6 und 18 C-Atome, besonders bevorzugt zwischen 6 und 12 C-Atome, vor allem 8, 9 oder 10 C-Atome umfasst und wobei vorzugsweise zwischen 1 und 18 Ethylenoxid (EO)-Einheiten, besonders bevorzugt zwischen 5 und 15 EO-Einheiten, vor allem 8, 9 oder 10 EO-Einheiten an den Alkylphenol-Rest angelagert sind, wobei die angegebenen Werte Durchschnittswerte sind und wobei der Alkylrest des Alkylphenols linear oder in 2-Stellung methylverzweigt sein kann bzw. lineare und methylverzweigte Reste im Gemisch enthalten kann, so wie sie üblicherweise in Oxoalkoholresten vorliegen. In einer besonders bevorzugten Ausführungsform handelt es sich bei dem nichtionischen Tensid um ein Anlagerungsprodukt von durchschnittlich 9 EO-Einheiten an Nonylphenol, wobei der Alkylrest und der Polyethylenrest vorzugsweise in meta-Stellung zueinander angeordnet sind. Ein solches Produkt ist beispielsweise unter dem Namen Disponil NP9 (Cognis, Deutschland) erhältlich.

In einer weiteren besonders bevorzugten Ausführungsform handelt es sich bei dem nichtionischen Tensid um ein Anlagerungsprodukt von Ethylenoxid (EO)-Einheiten an einen Fettalkohol, wobei der Fettalkohol vorzugsweise zwischen 10 und 22 C-Atome, besonders bevorzugt zwischen 14 und 20 C-Atome, vor allem zwischen 16 und 18 C-Atome umfasst, und wobei vorzugsweise zwischen 4 und 24, besonders bevorzugt zwischen 10 und 22, EO-Einheiten, vor allem 11, 12, 13, 19, 20 oder 21 EO-Einheiten, an den Fettalkohol angelagert sind. Bevorzugte Produkte, die aus einem C₁₆₋₁₈-Alkohol mit 12 bzw. 20 EO-Einheiten bestehen, sind beispielsweise unter den Handelsnamen Eumulgin B1 bzw. Eumulgin B2 (Cognis, Deutschland) erhältlich.

In einer weiteren besonders bevorzugten Ausführungsform handelt es sich bei dem nichtionischen Tensid um ein Anlagerungsprodukt von Ethylenoxid (EO)-Einheiten an einen Fettalkohol, wobei der Fettalkohol vorzugsweise zwischen 8 und 22 C-Atome, besonders bevorzugt zwischen 10 und 20 C-Atome, vor allem zwischen 12 und 18 C-Atome umfasst, und wobei vorzugsweise zwischen 3 und 15, besonders bevorzugt zwischen 5 und 11, EO-Einheiten, vor allem 6, 7, 8, 9 oder 10 EO-Einheiten, an den Fettalkohol angelagert sind. Bevorzugte Produkte, die aus einem C₁₂₋₁₈-Alkohol mit 7 bzw. 9 EO-Einheiten bestehen, sind beispielsweise unter den Handelsnamen Dehydol LT7 und Dehydol 100 (Cognis, Deutschland) erhältlich.

In einer weiteren besonders bevorzugten Ausführungsform handelt es sich bei dem nichtionischen Tensid um ein Anlagerungsprodukt von Ethylenoxid (EO)-Einheiten an einen Fettalkohol, wobei der Fettalkohol vorzugsweise zwischen 18 und 26 C-Atome, besonders bevorzugt zwischen 20 und 24 C-Atome, vor allem 22 C-Atome umfasst, und wobei vorzugsweise zwischen 6 und 16, besonders bevorzugt zwischen 8 und 12, EO-Einheiten, vor allem 9, 10 oder 11 EO-Einheiten, an den Fettalkohol angelagert sind. Ein bevorzugtes Produkt, das aus einem C₂₂-Alkohol mit 10 EO-Einheiten besteht, ist beispielsweise unter den Handelsnamen Mergital B10 (Cognis, Deutschland) erhältlich.

In einer weiteren besonders bevorzugten Ausführungsform handelt es sich bei dem nichtionischen Tensid um ein Anlagerungsprodukt von Ethylenoxid (EO)- und Propylenoxid (PO)-Einheiten an einen Fettalkohol, wobei der Fettalkohol vorzugsweise zwischen 6 und 18 C-Atome, besonders bevorzugt zwischen 10 und 16 C-Atome, vor allem zwischen 10 und 12 oder zwischen 12 und 14 C-Atome umfasst, und wobei vorzugsweise zwischen 1 und 10, besonders bevorzugt zwischen 3 und 7, vor allem 4, 5 oder 6, EO-Einheiten sowie vorzugsweise zwischen 1 und 10, besonders bevorzugt zwischen 2 und 6, vor allem 3, 4, 5 oder 6, PO-Einheiten an den Fettalkohol angelagert sind. In einer bevorzugten Ausführungsform handelt es sich hierbei bei dem nichtionischen Tensid um ein Block-Copolymer, bei dem vorzugsweise die EO-Einheiten an den Fettalkohol angelagert sind und die PO-Einheiten auf die EO-Einheiten folgen und wobei der Alkylrest des Fettalkohols linear oder in 2-Stellung methylverzweigt sein kann bzw. lineare und methylverzweigte Reste im Gemisch enthalten kann, so wie sie üblicherweise in Oxoalkoholresten vorliegen. Ein bevorzugtes Produkt, das aus einem C₁₂-C₁₄-Alkohol mit 5 EO- und 4 PO-Einheiten besteht, ist beispielsweise unter dem Namen Dehyppon LS 54 (Cognis, Deutschland) erhältlich. Ein weiteres bevorzugtes Produkt, das aus einem C₁₀₋₁₂-Alkohol mit 5 EO- und 5 PO-Einheiten besteht, ist beispielsweise unter dem Namen Biodac 2/32 (Cognis, Deutschland) erhältlich.

In einer weiteren erfindungsgemäß bevorzugten Ausführungsform handelt es sich bei dem nichtionischen Tensid um ein fluoriertes bzw. fluor-haltiges nichtionisches Tensid. Besonders bevorzugt handelt es sich hierbei um ein Anlagerungsprodukt von Alkylenoxid-Einheiten, insbesondere Ethylenoxid (EO)- und/oder Propylenoxid (PO)-Einheiten an einen Alkylalkohol, wobei der Alkylalkohol vorzugsweise zwischen 4 und 20 C-Atome, besonders bevorzugt zwischen 6 und 18 C-Atome umfasst, und wobei vorzugsweise zwischen 1 und 18, besonders bevorzugt zwischen 2 und 16 EO-Einheiten an den Alkylalkohol angelagert sind und wobei die Verbindung, vorzugsweise der Alkylrest, mindestens ein Fluor-Atom, vorzugsweise mindestens 5 Fluor-Atome, insbesondere zwischen 5 und 30 Fluor-Atome, enthält. In einer besonders bevorzugten Ausführungsform handelt es sich bei der Verbindung bzw. Mischung von Verbindungen um eine mit der Formel F(CF₂F₂)₁-₇CH₂CH₂O(CH₂CH₂O)₁₋₁₅H. Ein solches nicht-ionisches Tensid ist beispielsweise unter dem Namen Zonyl FSO 100 (Dupont, Frankreich) erhältlich.

Die Hydroxy-Gruppen der zuvor genannten Hydroxy-Gruppen tragenden nichtionischen Tenside können erfindungsgemäß in einer besonderen Ausführungsform auch teilweise oder vollständig verethert oder verestert sein. Es kann hierbei insbesondere eine Etherbindung zu einer C₁₋₆-Alkylgruppe, vorzugsweise zu einer Methyl-, Ethyl-, iso-Propyl- oder tert-Butyl-Gruppe, vorliegen. Unter den Esterbindungen sind solche zu einer C₁₋₆-Alkancarbonsäure, insbesondere zu Essigsäure oder Maleinsäure, bevorzugt.

Bevorzugt handelt es sich bei der anti-adhäsiv wirksamen Substanz um ein nichtionisches Tensid, besonders bevorzugt um Eumulgin B1 und/oder um einen Eumulgin B1-Kieselsäureester.

Die anti-adhäsiv wirksame Substanz wird in einer Menge von 0,001 bis 10 Gew.-%, besonders bevorzugt von 0,01 bis 2,0 Gew.-%, vor allem in einer Menge von 0,05 bis 1,0 Gew.-% eingesetzt. Bei Träger-gebundenen Formen der anti-adhäsiv wirksamen Substanz bezieht sich die Mengenangabe auf die Menge der Aktivsubstanz.

### Träger-gebundene Wirkstoffe

In einer bevorzugten Ausführungsform wird mindestens ein Wirkstoff ausgewählt aus Azol-Verbindungen, Sporulationsinhibitoren und anti-adhäsiven Substanzen in Träger-gebundener Form eingesetzt. Als Träger kommen hierbei insbesondere Moleküle in Frage, die eine kovalente Bindung und/oder eine interkalierende Bindung der Wirkstoffe ermöglichen. Als Beispiele für die erste Art von Trägern seien makromolekulare Moleküle mit Säurefunktion genannt, die die Bindung von Hydroxy-Gruppen haltigen Wirkstoffen in Form von Ester-Bindungen ermöglichen. Als Beispiele für die zweite Art von Trägern seien sogenannte Käfigmoleküle genannt, die die Aufnahme der Wirkstoffe in die Käfigstruktur ermöglichen.

Als Ester der Wirkstoffe, also der Azole, der Sporulationsinhibitoren und/oder der anti-adhäsiv wirksamen Substanzen, werden besonders bevorzugt solche mit Kieselsäuren gemäß den Formeln I und II eingesetzt. Die Herstellung der Kieselsäureester gelingt insbesondere durch einfache Umesterung von Kieselsäureestern (n=1) bzw. Oligokieselsäureestern (n>1) niederer Alkohole mit den genannten Wirkstoffen. Je nach Reaktionszeit und -bedingungen werden die niederen Alkohole abgespalten und die gewünschten Wirkstoffe gebunden, wobei die Alkohole entlang der Si-O-Si-Kette leichter ausgetauscht werden als die terminalen Alkohole.

Bevorzugt werden Kieselsäureester gemäß einer der Formeln (I) oder (II) und/oder deren Mischungen eingesetzt. 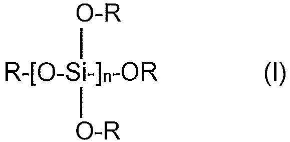 und 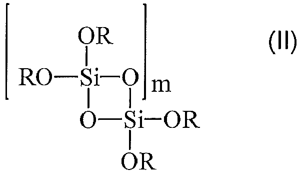 wobei mindestens ein R die Wirksubstanz, also je nachdem eine Azol-Verbindung, ein Sporulationsinhibitor oder eine anti-adhäsiv wirksame Substanz ist und alle anderen R unabhängig voneinander ausgewählt sind aus der Gruppe, die H, die geradkettigen oder verzweigten, gesättigten oder ungesättigten, substituierten oder unsubstituierten C₁₋₆-Kohlenwasserstoffreste, Terpenalkohole, sowie Polymere enthält, und m Werte aus dem Bereich 1 bis 20 und n Werte aus dem Bereich 1 bis 100 annimmt.

Nach einer weiteren bevorzugten Ausführungsform sind mindestens zwei oder drei Reste R die Wirksubstanz, also je nachdem eine Azol-Verbindung, ein Sporulationsinhibitor oder eine anti-adhäsiv wirksame Substanz.

Die Oligomerisierungsgrade "n" der erfindungsgemäßen Kieselsäureester liegen vorzugsweise zwischen 1 und 20. In besonders bevorzugten Verbindungen nimmt n Werte zwischen 1 und 15, insbesondere zwischen 1 und 12 und vor allem zwischen 1 und 10, insbesondere die Werte 4, 5, 6, 7 oder 8, an.

Die erfindungsgemäß verwendeten Kieselsäureester zeichnen sich durch eine gute Hydrolysestabilität aus und können auch in wäßrigen Medien bzw. in Herstellprozessen für Granulate, Dichtungsmassen, etc. eingesetzt werden, ohne dabei übermäßige Aktivitätsverluste zu erleiden. Die Freisetzung des Wirkstoffs aus den erfindungsgemäßen Stoffen erfolgt dadurch langsam und in vergleichsweise geringen Mengen, so dass über einen längeren Zeitraum kontinuierlich eine allmähliche Freisetzung der Wirkstoffe aus den Produkten erfolgt.

Nach einer besonders bevorzugten Ausführungsform können sich ein oder mehrere Polymerreste an den Kieselsäureestern befinden. Bevorzugt werden solche Polymere zur Herstellung der Kieselsäureester eingesetzt, die freie Hydroxylgruppen enthalten. Insbesondere sind der oder die Polymerrest(e) ausgewählt aus Stärke und/oder dessen Derivaten, Cellulose und/oder dessen Derivaten, Polyvinylalkohol, Polyolen, Hydroxypolydimethylsiloxanen (ganz besonders α,ω-Dihydroxypolydimethylsiloxane) und Polyphenolen, insbesondere Polyvinylalkohol. Insbesondere ist es bevorzugt, wenn sich ein Polymerrest an den Wirkstoffe tragenden Kieselsäureestern befindet. Für die Verwendung in Dichtungsmassen ist es besonders bevorzugt eher kurzkettige Polymere einzusetzen.

Diese spezielle Ausführungsform hat den Vorteil, dass man die Kieselsäureester je nach Anwendungsgebiet individuell auf den Anwendungszweck bzw. die - gegebenheiten anpassen kann. Beispielsweise sind solche Polymere besonders geeignet, die Einarbeitbarkeit der Stoffe zu verbessern, die Haftung, insbesondere an Oberflächen, zu erhöhen und die Freisetzungseigenschaften gewünschtermaßen zu beeinflussen.

Des weiteren können auch Ester der erfindungsgemäßen Azol-Verbindungen, Sporulationsinhibitoren und/oder anti-adhäsiv wirksamen Substanzen mit Polymeren eingesetzt werden. Auch für diese Stoffe ergeben sich bessere Anpassbarkeit an den Anwendungszweck, beispielsweise ein besseres Aufziehen oder Anhaften an Oberflächen oder günstigere Bedingungen für die Einarbeitbarkeit. Die Hydrolyse dieser Esterbindung, z. B. bei sich wiederholendem Kontakt mit Wasser, setzt langsam die Wirkstoffe frei, die dann ihre Wirkung entfalten können.

Besonders bevorzugt werden solche Stoffe durch Reaktion des Wirkstoffs mit solchen Polymeren durchgeführt, die funktionelle Gruppen tragen, die insbesondere ausgewählt sind aus Säuregruppen, Säurechloridgruppen, Estergruppen, primären, sekundären und tertiären Amidgruppen.

Bevorzugterweise werden als Polymere erfindungsgemäß Polyacrylsäure, Polyacrylsäureester, Polymethacrylsäure, Polymethacrylsäureester, Polycarbonsäuren, (insbesondere Carboxymethylcellulose) sowie Copolymere aus dem zugrundeliegenden Monomer (auch mit anderen als den genannten Monomeren) und primäre, sekundäre oder tertiäre Polyacrylamide eingesetzt. Insbesondere sind dabei Kettenlängen von ca. 2000 bis 300000 g/mol bevorzugt.

Gemäß einer weiteren bevorzugten Ausführungsform wird der Polymer-Ester hergestellt durch Umsetzung des Wirkstoffs mit Monomeren oder Polymeren, die ein oder mehrere Isocyanatgruppen tragen. Die sich durch die Reaktion von einer Alkoholfunktion mit einer Isocyanatgruppe ergebenen Urethane hydrolysieren ebenfalls langsam und geben den Wirkstoff kontrolliert frei.

Bevorzugt ist der Einsatz von monomeren aliphatischen oder aromatischen Mono-, Di- und/oder Triisocyanaten. Die daraus entstehenden Urethane bzw. Polyurethane (bei Verwendung von Isocyanaten mit mehreren Isocyanatgruppen) können ebenfalls hydrolysieren und die Wirkstoffe langsam freisetzen.

Als Monoisocyanate sind beispielsweie die linearen oder verzweigten aliphatischen Monoisocyanate mit 6 bis 44 C-Atomen, beispielsweise Hexylisocyanat, Heptylisocyanat, Octylisocyanat, Nonylisocyanat, Decylisocyanat, Undecylisocyanat, Dodecylisocyanat, Tridecylisocyanat, Quaterdecylisocyanat, Pentadecylisocyanat, Hexadecylisocyanat, Heptadecylisocyanat, Octadecylisocyanat und die entsprechenden höheren Homologe dieser Reihe bevorzugt. Ebenfalls bevorzugt sind aromatische Monoisocyanate wie Phenylisocyanat, Benzylisocyanat oder Biphenylisocyanat.

Als Diisocyanate (Q(NCO)₂) sind insbesondere solche bevorzugt, bei denen Q ausgewählt ist aus einem aliphatischen, ggf. substituierten Kohlenwasserstoffrest mit 4 bis etwa 15 Kohlenstoffatomen, einem aromatischen, ggf. substituierten Kohlenwasserstoffrest mit 6 bis etwa 15 Kohlenstoffatomen oder einen ggf. substituierten araliphatischen Kohlenwasserstoffrest mit 7 bis etwa 15 Kohlenstoffatomen. Beispielsweise genannt seien hier Tetramethylendiisocyanat, Hexamethylendiisocyanat, Dodecamethylendiisocyanat, Dimerfettsäurediisocyanat, 1,4-Diisocyanato-cyclohexan, 1-Isocyanato-3,3,5-trimethyl-5-isocyanato-methylcyclohexan (IDPI), 4,4'-Diisocyanato-dicyclohexylmethyl, 4,4'-Diisocyanatodicyclohexylpropan-2,2, 1,3- und 1,4-Diisocyanatobenzol, 2,4- oder 2,6-Diisocyanatotoluol oder deren Gemische, 2,2'-, 2,4 oder 4,4'-Diisocyanato-diphenylmethan, Tetramethylxylylendiisocyanat, p-Xylylendiisocyanat sowie aus diesen Verbindungen bestehende Gemische.

Besonders bevorzugt sind Toluendiisocyanat, Hexamethylendiisocyanat und meta-Tetramethylxylylendiisocyanat.

Als Triisocyanate kommen dabei hauptsächlich aromatische Triisocyanate in Frage wie zum Beispiel der Thiophosphorsäure-tris-(p-Isocyanato-Phenylester), das Triphenylmethan-4,4',4"-Triisocyanat sowie insbesondere die verschiedenen isomeren trifunktionellen Homologen des Diphenylmethandiisocyanats (MDI).

Weiterhin sind als Triisocyanate auch Addukte aus Diisocyanaten und niedermolekularen Triolen geeignet, insbesondere die Addukte aus aromatischen Diisocyanten und Triolen wie zum Beispiel Trimethylolpropan oder Glycerin. Auch bei diesen Addukten gelten die oben genannten Einschränkungen bezüglich des Diisocyanatgehaltes sowie des Gehaltes an Polyisocyanaten mit einer Funktionalität >3.

Auch aliphatische Triisocyanate wie zum Beispiel das Biuretisierungsprodukt des Hexamethylendiisocyanates (HDI) oder das Isocyanuratisierungsprodukt des HDI oder auch die gleichen Trimerisierungsprodukte des Isophorondiisocyanats (IPDI) sind für die erfindungsgemäßen Zusammensetzungen geeignet.

Polyisocyanate sind die Dimerisierungs- oder Trimerisierungsprodukte der bereits als bevorzugt genannten Diisocyanate. Beispiele für geeignete Isocyanate sind die Dimerisierungs- oder Trimerisierungsprodukte der Diisocyanate 2,4-Toluylendiisocyanat (2,4-TDI), 2,6-Toluylendiisocyanat (2,6-TDI), oder ein Gemisch der genannten Isomeren, 2,2`-Diphenylmethandiisocyanat (2,2'-MDI), 2,4'-Diphenylmethandiisocyanat (2,4'-MDI), 4,4'-Diphenylmethandiisocyanat (4,4'-MDI), 1,5-Naphthylendiisocyanat (NDI), 1,4-Phenylendiisocyanat, 1,3-Tetramethylxylylendiisocyanat (TMXDI), hydriertes MDI (HMDI), Isophorondiisocyanat (IPDI), Hexamethylendiisocyanat-1,6 (HDI), 2-Isocyanatopropylcyclohexylisocyanat (IPCI), 2-Butyl-2-ethyl-pentamethylendiisocyanat (BEPDI), Lysindiisocyanat (LDI), 1,12-Dodecyldiisocyanat, Cyclohexyl-1,3- oder -1,4-diisocyanat, 2-Methylpentamethylendiisocyanat (MPDI) oder dergleichen, beispielsweise enthaltend Urethan-, Allophanat-, Harnstoff-, Biuret-, Uretidon-, Carbidiimid- oder Ketonimingruppen wie sie durch Dimerisierung oder Trimerisierung der oben genannten Diisocyanate entstehen. Besonders geeignet sind oligomere oder polymere Isocyanatgruppen tragende Verbindungen, wie sie beispielsweise bei der Isocyanatherstellung anfallen oder als Restprodukte bei der Destillierung von Isocyanatrohprodukten im Destillationssumpf verbleiben. Beispiele für in diesem Zusammenhang besonders geeignete Materialien sind Roh-MDI, wie es direkt nach der Herstellung von MDI erhältlich ist, und Polymer-MDI, wie es nach der Destillation von MDI aus dem Roh-MDI im Destillationssumpf verbleibt.

Es ist bevorzugt, eine entsprechende Menge an Wirkstoff zu den Monomeren hinzuzugeben und so entsprechende Monomere zu erzeugen. So können Stoffe erzeugt werden, die je nach verwendeten Monomeren (Monoisocyanate, Diisocyanate, Triisocyanate oder Polyisocyanate) ein oder mehrere, insbesondere ein, zwei oder drei freisetzbare Wirkstoffe tragen. Es ist dabei auch möglich, über eine Polymerisationsreaktion eine Polymerkette mit endständigen Wirkstoffresten zu erzeugen.

Solche Monomere bzw. Polymere können beispielsweise in Dichtungsmassen direkt in der Kartusche oder in einem separaten Kompartiment als Additive eingesetzt werden. Ebenfalls können auch bei der Produktion der Dichtungsmassen, insbesondere bei solchen auf Urethanbasis, die entsprechenden Wirkstoffe direkt zu den Monomeren der Dichtungsmassen zugegeben werden. Der Einsatz der Reaktionsprodukte aus Mono-, Di- und/oder Triisocyanaten mit den entsprechenden Wirkstoffen in Dichtungsmassen ist besonders bevorzugt.

Als Kettenverlängerungsmittel, die im Rahmen einer Polymerisationsreaktion zur Herstellung der erfindungsgemäß zu verwendenden Stoffe zusätzlich eingesetzt werden können, eignen sich beispielsweise mehrwertige Alkohole wie Ethylenglykol, Propylenglykol, Propandiol-1,3, Butandiol-1,4, Hexandiol-1,6, Trimethylolpropan, Glyzerin, Pentaerythrit, Sorbit, Mannit oder Glucose. Auch niedermolekulare Polyesterdiole wie Bernsteinsäure-, Glutarsäure- oder Adipinsäure-bis-(hydroxyethyl)-ester, oder ein Gemisch aus zwei oder mehr davon, oder niedermolekulare, Ethergruppen aufweisende Diole, wie Diethylenglykol, Triethylenglykol, Tetraethylenglykol, Dipropylenglykol, Tripropylenglykol oder Tetrapropylenglykol können mit verwendet werden. Ebenfalls geeignet sind Amine wie Ethylendiamin, Hexamethylendiamin, Piperazin, 2,5-Dimethylpiperazin, 1-Amino-3-aminomethyl-3,5,5-trimethylcyclohexan (Isophorondiamin, IPDA), 4,4'-Diamino-dicyclohexylmethan, 1,4-Diaminocyclohexan, 1,2-Diaminopropan, Hydrazin, Hydrazinhydrat, Aminosäurehydrazide wie 2-Aminoessigsäurehydrazid oder Bis-hydrazide wie Bernsteinsäurebishydrazid. Die Mitverwendung von im Sinne einer Isocyanat-Polyadditionsreaktion tri- oder höherfunktionellen Verbindungen in geringen Anteilen ist zur Erzielung eines gewissen Verzweigungsgrades ebenso möglich wie die bereits erwähnte mögliche Mitverwendung von tri- oder höherfunktionellen Polyisocyanaten zum gleichen Zweck. Einwertige Alkohole wie n-Butanol oder n-Dodecanol und Stearylalkohol können in geringen Mengen mitverwendet werden.

In einer erfindungsgemäß bevorzugten Ausführungsform liegt mindestens eine der Wirksubstanzen ausgewählt aus Azol, Sporulationsinhibitor und anti-adhäsiv wirksamer Substanz in zuvor ausgeführter veresterter Form, vorzugsweise als Kieselsäureester, vor.

Unter Käfigmolekülen sind im erfindungsgemäßen Zusammenhang insbesondere solche organischen makrocyclischen Moleküle zu verstehen, die eine käfigartige, räumliche Struktur aufweisen und in der Lage sind, als sogenannte Wirtsmoleküle ein oder mehrere sogenannte Gastmoleküle einzuschließen. Bevorzugt wird jeweils nur ein Gastmolekül eingeschlossen.

Die gezielte, langsame Freisetzung der Wirksubstanzen kann hierbei über Gleichgewichtseinstellung aus einer (häufig nicht kovalenten) Bindung oder durch Komplexierung der Verbindung aus einem Käfigmolekül stattfinden.

Die Einarbeitbarkeit der beladenen Käfigmoleküle in die erfindungsgemäßen Produkte, insbesondere in solche mit hydrophoberem Charakter, ist aufgrund der eher hydrophoben Außenhülle der Käfigsubstanzen besonders gut.

Ein besonders großer Vorteil der Verwendung von Käfigmolekülen ist, dass es möglich ist, die herausdiffundierten Substanzen nach einer längeren Zeit in den Produkten wieder zu ersetzen, indem die Käfigmoleküle wieder aufgeladen werden. Insbesondere sind hierzu konzentrierte Lösungen der genannten Wirkstoffe geeignet. Es ist in diesem Sinne ebenfalls möglich, Produkte herzustellen, die nicht von vornherein die freien Wirkstoffe komplexiert bzw. gebunden in den Käfigmolekülen enthalten, sondern erst in der Anwendungssituation durch diese beladen werden. Formulierungstechnisch ist das für dem Fachmann bekannte Einsatzgebiete sinnvoll.

Als organische Käfigmoleküle seien Cucurbiturile, Calixarene, Calixresorcarene, Cyclodextrine, Cyclophane, Kronenether, Fullerene, Cryptophane, Carceranden, Hemicarceranden, Cyclotriveratrylene, Spheranden und Cryptanden genannt.

Besonders bevorzugt sind erfindungsgemäß die Cucurbiturile, Calixarene und Calixresorcarene, ganz besonders Cucurbiturile.

Cucurbiturile und ihre Herstellung sind in der Literatur beschrieben, beispielsweise in der WO 00/68232 und der EP-A 1 094 065 sowie der dort zitierten weiteren Literatur. Unter einem im Sinne der Erfindung einsetzbaren Cucurbituril ist grundsätzlich jeder Stoff zu verstehen, der in der Literatur als zu dieser Verbindungsklasse gehörig beschrieben ist. Definitionsgemäß einbezogen sind hier die in der WO 00/68232 beschriebenen Cucurbiturile und substituierten Cucurbiturile sowie die in der EP-A 1 094 065 beschriebenen Cucurbituril-Derivate. Anstelle eines einheitlichen Cucurbiturils, substituierten Cucurbiturils oder Cucurbituril-Derivats können ebenso Mischungen von zwei oder mehr derartiger Verbindungen eingesetzt werden. Soweit im folgenden Text von einem Cucurbituril die Rede ist, und nicht ausdrücklich etwas anderes angegeben ist, ist darunter in gleicher Weise ein chemisch einheitliches Cucurbituril oder auch ein Gemisch zweier oder mehrerer Cucurbiturile, substituierter Cucurbiturile und/oder Cucurbituril-Derivate zu verstehen. Dementsprechend beziehen sich Mengenangaben von Cucurbiturilen, soweit nicht ausdrücklich etwas anderes angegeben ist, stets auf die Gesamtmenge des einen oder der mehreren Cucurbiturile, substituierten Cucurbiturile und/oder Cucurbituril-Derivate.

Im Sinne der vorliegenden Erfindung bevorzugt sind Cucurbit[n]urile der Ringgröße 5 bis 11, sowie deren Gemische, wobei Cucurbit[6]uril sowie Mischungen mit einem überwiegenden Anteil an Cucurbit[6]uril besonders bevorzugt sind.

Weiterhin können Calix[n]arene gemäß Formel (VIII) eingesetzt werden. 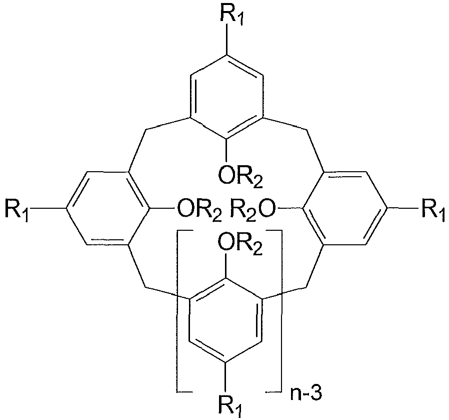 wobei
R₁ ausgewählt ist aus R₁ = H, Alkyl, Aryl, Alkenyl, Alkinyl sowie substituierten Alkylen, Arylen, Alkenylen, Alkinylen, die Gruppen tragen, die ausgewählt sind aus -OH, -OR', -NH₂, -NHR', -NR'R", NR'R"R"'⁺ ,NO₂, Halogen, SO₃H, SO₃M (M = Alkalimetalle, Erdalkalimetalle), Carbonsäuren, Ketonen, Aldehyden, Amiden, Estern, -SO₂NH₂, -SO₂NHR, -SO₂NR'R", -SO₂Halogen, schwefel-, phosphor-, siliziumhaltigen Gruppen.
und
R₂ ausgewählt ist aus R₂ = H, Alkyl, Aryl, Alkenyl, Alkinyl, sowie substituierten Alkylen, Arylen, Alkenylen, Alkinylen , die Gruppen tragen, die ausgewählt sind aus -OH, -OR', -NH₂, -NHR', -NR'R", -NR'R"R"'⁺, -NO₂, Halogen, -SO₃H, -SO₃M (M = Alkalimetalle, Erdalkalimetalle), Carbonsäuren, Ketonen, Aldehyden, Amiden, Estern, -SO₂NH₂, -SO₂NHR', -SO₂NR'R", -SO₂Halogen, schwefel-, phosphor-, oder siliziumhaltigen Gruppen,
wobei R', R", R'" unabhängig von einander ausgewählt sind aus H, Alkyl, Aryl, Alkenyl, Alkinyl, substituierten Alkyle, Aryle, Alkenyle, Alkinyle

Bevorzugt sind dabei Calixarene gemäß Formel (VIII) für die gilt:
R₁ ausgewählt ist aus R₁ = H, Alkyl, Aryl, Alkenyl, Alkinyl sowie substituierten Alkylen, Arylen, Alkenylen, Alkinylen, die Gruppen tragen, die ausgewählt sind aus -OH, -OR', -NH₂, -NHR', -NR'R", NR'R"R"'⁺ ,NO₂, Halogen, SO₃H, Carbonsäuren, Ketonen, Aldehyden, Amiden, Estern, -SO₂NR'R".
und
R₂ ausgewählt ist aus R₂ = H, Alkyl, Aryl, Alkenyl, Alkinyl, sowie substituierten Alkylen, Arylen, Alkenylen, Alkinylen , die Gruppen tragen, die ausgewählt sind aus -OH, -OR', -NH₂, -NR'R", -NR'R"R"'⁺, -NO₂, Halogen, -SO₃H, Carbonsäuren, Ketonen, Aldehyden, Amiden, Estern, -SO₂NR'R".
wobei R', R", R"' unabhängig von einander ausgewählt sind aus H, Alkyl, Aryl, Alkenyl, Alkinyl sowie substituierten Alkylen, Arylen, Alkenylen, Alkinylen.

Im Sinne der vorliegenden Erfindung bevorzugt sind Calix[n]arene der Ringgröße n= 4 bis 12, sowie deren Gemische, wobei Calix[6]- und/oder Calix[4]arene sowie Mischungen mit einem überwiegenden Anteil an Calix[6]- und/oder Calix[4]arene besonders bevorzugt sind.

Darüber hinaus sind Calix[n]resorcarene, auch als Resorcinarene bekannt, gemäß Formel IX zu verwenden. N gibt dabei die Zahl der Kettenglieder an und kann 4 oder 6 betragen. 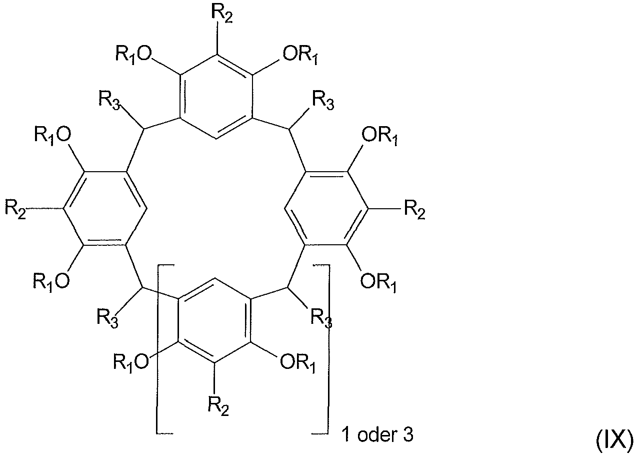 wobei R₁, R₂ und R₃ ausgewählt sind aus:
R₁= H, Alkyl, Aryl, Alkenyl, Alkinyl, sowie substituierten Alkylen, Arylen, Alkenylen, Alkinylen, die Gruppen tragen, die ausgewählt sind aus -OH, -OR, -NH₂, -NHR', -NR'R", NR'R"R"'⁺ , -NO₂, Halogen, SO₃H, SO₃M (M = Alkalimetalle, Erdalkalimetalle), Carbonsäuren, Ketone, Aldehyde, Amide, Ester, SO₂NH₂, SO₂NHR, SO₂NR₂, SO₂Halogen, schwefel-, phosphor-, siliziumhaltige Gruppen
und
R₂,R₃ unabhängig von einander ausgewählt sind aus R₂, R₃= H, Alkyl, Aryl, Alkenyl, Alkinyl, sowie substituierten Alkylen, Arylen, Alkenylen, Alkinylen, die Gruppen tragen, die ausgewählt sind aus -OH, -OR, -NH₂, -NHR, NR'R", NR'R"R"'⁺, -NO₂, Halogen, -SO₃H, -SO₃M (M = Alkalimetalle, Erdalkalimetalle), Carbonsäuren, Ketonen, Aldehyden, Amiden, Estern, -SO₂NH₂, -SO₂NHR, -SO₂NR₂, -SO₂Halogen, schwefel-, phosphor-, siliziumhaltige Gruppen,
und wobei R', R", R"' unabhängig von einander ausgewählt sind aus H, Alkyl, Aryl, Alkenyl, Alkinyl sowie substituierten Alkylen, Arylen, Alkenylen, Alkinylen.
Bevorzugt sind Calix[4]resorcarene und/oder Calix[6]resorcarene gemäß Formel (IX), für die gilt, dass
R₁ ausgewählt ist aus R₁ = H, Alkyl, Aryl, Alkenyl, Alkinyl sowie substituierten Alkylen, Arylen, Alkenylen, Alkinylen, die Gruppen tragen, die ausgewählt sind aus -OH, -OR', -NH₂, -NHR', -NR'R", NR'R"R"'⁺ ,NO₂, Halogen, SO₃H, Carbonsäuren, Ketonen, Aldehyden, Amiden, Estern, -SO₂NR'R".
und
R₂,R₃ unabhängig von einander ausgewählt sind aus R₂, R₃= H, Alkyl, Aryl, Alkenyl, Alkinyl, sowie substituierten Alkylen, Arylen, Alkenylen, Alkinylen , die Gruppen tragen, die ausgewählt sind aus -OH, -OR', -NH₂, -NR'R", -NR'R"R"'⁺, -NO₂, Halogen, -SO₃H, Carbonsäuren, Ketonen, Aldehyden, Amiden, Estern, - SO₂NR'R".
wobei R', R", R"' unabhängig von einander ausgewählt sind aus H, Alkyl, Aryl, Alkenyl, Alkinyl sowie substituierten Alkylen, Arylen, Alkenylen, Alkinylen.

Insbesondere ist es bevorzugt, wenn R₂ = R₃ ist, d.h. R₂ und R₃ die gleichen Substitutenten darstellen.

Gemäß einer weiteren Ausführungsform sind die Träger-gebundenen Formen der Wirksubstanzen in einer Menge bis zu 50 Gew.-% enthalten, bevorzugt in einer Menge von 1 bis 20 Gew.-% und insbesondere in einer Menge von 5 bis 15 Gew.-%.

### Baustoffe und Bauhilfsstoffe

Vorzugsweise sind die erfindungsgemäß ausgerüsteten Baustoffe oder Bauhilfsstoffe ausgewählt aus Klebe-, Dichtungs-, Spachtel- und Anstrichmassen, Klebstoffen, Kunststoffen, Lacken, Farben, Putz, Mörtel, Estrich, Beton, Isoliermaterialien sowie Grundierungen. Besonders bevorzugte Baustoffe oder Bauhilfsstoffe sind Fugendichtungsmassen (bspw. silikonhaltige Fugendichtungsmassen), Tapetenkleister, Putz, insbesondere Wand- und Fließenputz, Teppichfixierer, Silikonkleber, Farben, insbesondere Fassadenfarben, Wandfarben und/oder Dispersionsfarben, Anstrichmassen für den Innen- und/oder Außenbereich und Fliesenkleber.

Dichtungsmassen und insbesondere Fugendichtungsmassen enthalten typischerweise organische Polymere sowie in vielen Fällen mineralische oder organische Füllstoffe und sonstige Additive.

Geeignete Polymere sind beispielsweise thermoplastische Elastomere, wie in der DE-A-3602526 beschrieben, vorzugsweise Polyurethane und Acrylate. Geeignete Polymere sind auch in den Offenlegungsschriften DE-A-3726547, DE-A-4029504 und DE-A-4009095 sowie in DE-A-19704553 und DE-A-4233077 genannt, auf die hiermit in vollem Umfang Bezug genommen wird.

Erfindungsgemäß kann die Ausrüstung der erfindungsgemäßen Dichtstoffe sowohl im ungehärteten oder bei unter 60 °C gehärteten Zustand erfolgen. Dichtstoffe sind im erfindungsgemäßen Zusammenhang Materialien gemäß DIN EN 26927, insbesondere solche, die plastisch oder elastisch als Dichtstoffe aushärten. Die erfindungsgemäßen Dichtstoffe können alle für die entsprechenden Dichtungsmassen typischen Zusatzstoffe, wie z.B. typische Verdickungsmittel, verstärkende Füllstoffe, Vernetzer, Vernetzungskatalysatoren, Pigmente, Haftmittel oder sonstige Volumenextender enthalten. Die einzusetzenden Wirkstoffe können durch Eindispergieren in dem Fachmann bekannter Weise, z.B. durch die Verwendung von Dispergiereinrichtungen, Kneter, Planetenmischer usw., unter Ausschluss von Feuchtigkeit und Sauerstoff sowohl in die fertige als auch in Teile dieser Dichtungsmassen bzw. zusammen mit einer oder mehreren Komponenten der Dichtungsmassen eingearbeitet werden.

Selbst die Behandlung von bereits ausgehärteten, vernetzten Dichtungsmassenoberflächen kann durch Aufbringen von Lösungen bzw. Suspensionen der erfindungsgemäß verwendeten Substanz durchgeführt werden, indem der Wirkstoff durch Quellung bzw. Diffusion in die Dichtungsmasse transportiert wird.

Erfindungsgemäß einsetzbare Dichtstoffe können sowohl auf Silikon-, Urethan- als auch auf Acrylbasis oder etwa auf MS-Polymerbasis hergestellt werden. Dichtstoffe auf Urethanbasis sind bspw. in Ullmann's Encyclopedia of Industrial Chemistry (8. Auflage 2003, Kapitel 4) sowie US 4,417,042 offenbart. Silikondichtstoffe sind dem Fachmann bekannt, bspw. aus der EP 0 118 030 A, EP 0 316 591 A, EP 0 327 847 A, EP 0 553 143 A, DE 195 49 425 A und US 4,417,042. Beispiele für Acryldichtstoffe sind u.a. in der WO 01/09249 oder der US 5,077,360 offenbart. Beispiele für Dichtstoffe auf MS-Polymerbasis sind beispielsweise in der EP 0 824 574, US 3,971,751, US 4,960,844, US 3,979,344, US 3,632,557, DE 4029504, EP 601 021 oder der EP 370 464 offenbart.

In einer besonders bevorzugten Ausführungsform handelt es sich bei der Fugendichtungsmasse um eine Fugendichtungsmasse auf Silikon-Basis, insbesondere ausgewählt aus Acetat-, Alkoxy-, Oxim-, Benzamid- und Aminsilikonen. Die Fungedichtungsmasse enthält hierbei vorzugsweise als Polyorganosiloxane und als Organosilikonverbindungen mit hydrolysierbaren Gruppen Verbindungen wie sie in der Patentschrift US 5,378,406 beschrieben werden in den dort angegebenen Mengen, deren diesbezügliche Offenbarung hiermit zum Gegenstand dieser Patentanmeldung gemacht wird.

Insbesondere sind bei Raumtemperatur vernetzende Systeme, wie bspw. in der EP 0 327 847 oder US 5,077,360 beschrieben, bevorzugt. Dabei kann es sich um ein-oder mehrkomponentige Systeme handeln, wobei in den mehrkomponentigen Systemen Katalysator und Vernetzer getrennt vorliegen können (beispielsweise offenbart in den Patentschriften US 4,891,400 und US 5,502,144), oder andere sogenannte Silikon RVT 2K-Systeme, insbesondere platinfreie Systeme.

Besonders bevorzugt sind sogenannte Einkomponentensysteme, die alle Inhaltsstoffe zum Aufbau einer Dichtungsmasse enthalten, unter Abschluß von Luftfeuchtigkeit und/oder Luftsauerstoff gelagert werden und am Einsatzort unter Reaktion mit der Luftfeuchtigkeit aushärten. Besonders bevorzugt sind die sogenannten Silikon-Neutralsysteme, in denen die Umsetzung von Vernetzern mit dem Wasser der Umgebungsluft nicht zu korrosiven, sauren, basischen oder geruchsintensiven Spaltprodukten führt. Beispiele für solche Systeme sind in der DE 195 49 425, der US 4,417,042 oder der EP 0 327 847 offenbart.

Die Dichtungsmassen und insbesondere Fugendichtungsmassen können wäßrige oder organische Lösungsmittel enthalten. Als organische Lösungsmittel kommen Kohlenwasserstoffe wie Cyclohexan, Toluol oder auch Xylol oder Petrolether in Frage. Weitere Lösungsmittel sind Ketone wie Methylbutylketon oder Chlorkohlenwasserstoffe.

Weiterhin können die Dichtungsmassen noch weitere kautschukartige Polymere enthalten. Hier kommen relativ niedermolekulare, handelsübliche Typen von Polyisobutylen, Polyisopren oder auch Polybutadienstyrol in Frage. Auch die Mitverwendung von abgebautem Naturkauschuk oder von Neoprenkautschuk ist möglich. Hier können auch bei Raumtemperatur noch fließfähige Typen eingesetzt werden, welche häufig als "Flüssigkautschuk" bezeichnet werden.

Die erfindungsgemäßen Dichtungsmassen können verwendet werden, um die verschiedensten Materialien miteinander zu verbinden bzw. abzudichten. Hier ist in erster Linie an die Verwendung auf Beton, auf Glas, auf Putz und/oder Emaille sowie Keramik und Porzellan gedacht. Aber auch das Verbinden bzw. Abdichten von Formteilen bzw. Profilen aus Aluminium, Stahl, Zink oder auch aus Kunststoffen wie PVC oder Polyurethanen oder Acrylharzen ist möglich. Schließlich sei das Abdichten von Holz oder Holzmaterialien mit den verschiedensten anderen Werkstoffen erwähnt.

Die Standfestigkeit von Fugendichtungsmassen wird in der Regel durch Zusatz von feinteiligen Feststoffen - auch Füllstoffe genannt - erzielt. Diese lassen sich in solche organischer und solche anorganischer Art unterscheiden. Als anorganische Füllstoffe können beispielsweise Kieselsäure/Siliciumdioxid (gecoatet oder ungecoatet), Kreide - gecoatet oder ungecoatet - und/oder Zeolithe bevorzugt sein. Letztere können zudem auch als Trockenmittel fungieren. Als organischer Füllstoff kommt z. B. PVC- Pulver in Betracht. Die Füllstoffe tragen im allgemeinen wesentlich dazu bei, dass die Dichtungsmasse nach der Anwendung einen notwendigen inneren Halt besitzt, so dass ein Auslaufen oder Ausbuchten der Dichtungsmasse aus senkrechten Fugen verhindert wird. Die genannten Zusatz- bzw. Füllstoffe lassen sich in Pigmente und thixotropierende Füllstoffe, auch verkürzt als Thixotropiermittel bezeichnet, einteilen.

Als Thixotropierungsmittel eignen sich die bekannten Thixotropierungsmittel wir Bentone, Kaoline oder auch organische Verbindungen wie hydriertes Rizinusöl bzw. Derivate desselben mit mehrfunktionellen Aminen oder die Umsetzungsprodukte von Stearinsäure oder Rizinolsäure mit Ethylendiamin. Als besonders günstig hat sich die Mitverwendung von Kieselsäure, insbesondere von Kieselsäure aus der Pyrolyse erwiesen. Außerdem kommen als Thixotropiermittel im wesentlichen quellfähige Polymerpulver in Betracht. Beispiele sind hierfür Polyacrylnitril, Polyurethan, Polyvinylchlorid, Polyacrylsäureester, Polyvinylalkohole, Polyvinylacetate sowie die entsprechenden Copolymerisate. Besonders gute Ergebnisse lassen sich mit feinteiligem Polyvinylchloridpulver erhalten. Neben den Thixotropierungsmitteln können auch noch zusätzlich Haftvermittler eingesetzt werden wie etwa Mercaptoalkylsilan. Hier hat es sich als zweckmäßig erwiesen, ein Monomercaptoalkyltrialkoxysilan einzusetzen. Handelsüblich ist beispielsweise das Mercaptopropyltrimethoxysilan.

Die Eigenschaften einer Fugendichtungsmasse lassen sich noch weiter verbessern, wenn dem als Thixotropiermittel verwendeten Kunststoffpulver weitere Komponenten zugesetzt werden. Dabei handelt es sich um Stoffe, die unter die Kategorie der für Kunststoffe angewendeten Weichmacher bzw. Quellmittel und Quellhilfsmittel fallen.

Es kommen z. B. Weichmacher, insbesondere für die Dichtungsmassen auf Urethan- bzw. Acrylbasis aus der Klasse der Phthalsäureester in Betracht. Beispiele für anwendbare Verbindungen aus dieser Substanzklasse sind Dioctylphthalat, Dibutylphthalat und Benzylbutylphthalat. Weitere geeignete Substanzklassen sind Chlorparaffine, Alkylsulfonsäureester etwa der Phenole oder Kresole sowie Fettsäureester.

Für die Silikondichtungsmassen sind als Weichmacher Silikonöle, besonders bevorzugt Polydimethylsiloxane, sowie Kohlenwasserstoffe und/oder deren Gemische, von denen besonders Kohlenwasserstoffe bzw. deren Gemische mit einem Siedepunkt von größer 200°C, insbesondere größer 230 °C, gut geeignet.

Als Quellhilfsmittel sind solche niedermolekularen organischen Substanzen einsetzbar, die mit dem Polymerpulver und dem Weichmacher mischbar sind. Derartige Quellhilfsmittel lassen sich den einschlägigen Kunststoff- und Polymer-Handbüchern für den Fachmann entnehmen. Als bevorzugte Quellhilfsmittel für Polyvinylchloridpulver dienen Ester, Ketone, aliphatische Kohlenwasserstoffe, aromatische Kohlenwasserstoffe sowie aromatische Kohlenwasserstoffe mit Alkylsubstituenten.

### Als Pigmente und Farbstoffe werden die für diese Verwendungszwecke bekannten Substanzen wie Titandioxid, Eisenoxide und Ruß verwendet

Zur Verbesserung der Lagerstabilität werden bekanntermaßen den Dichtungsmassen Stabilisatoren wie Benzoylchlorid, Acetylchlorid, Toluolsulfonsäuremethylester, Carbodiimide und/oder Polycarbodiimide zugesetzt. Als besonders gute Stabilisatoren haben sich Olefine mit 8 bis 20 Kohlenstoffatomen erwiesen. Neben der stabilisierenden Wirkung können diese auch Aufgaben von Weichmachern bzw. Quellmitteln erfüllen. Bevorzugt werden Olefine mit 8 bis 18 Kohlenstoffatomen, insbesondere wenn die Doppelbindung in 1,2-Stellung angeordnet ist. Beste Ergebnisse erhält man, wenn die Molekülstruktur dieser Stabilisatoren linear ist.

Eine weitere bevorzugte Ausführungsform der vorliegenden Erfindung sind Tapetenkleber, enthaltend erfindungsgemäße Wirkstoffe oder Wirkstoffkombinationen, insbesondere Tapetenkleister aus wässrigen Lösungen von Hydrokolloiden wie Methylcellulose, Methylhydroxypropylcellulose oder wasserlöslichen Stärkederivaten. Auch wässrige Dispersionen von filmbildenden hochmolekularen Verbindungen wie Polyvinylacetat können, insbesondere in Verbindung mit den bereits erwähnten Cellulose- und Stärkederivaten, eingesetzt werden.

Als Filtermedien können alle bekannten Arten eingesetzt werden, solange sie für den Einsatz in Wasser- oder Luftfilteranlagen geeignet sind. Insbesondere sind Filtermaterialien aus Cellulose, Glasfasern, PVC-Fasern, Polyesterfasern, Polyamidfasern, insbesondere Nylonfasern, Vliesstoffen, Sintermaterialien und Membranfilter zu nennen.

### Pilze

Die Pilze, die durch die Azole abgetötet, durch die Sporulationsinhibitoren in der asexuellen Vermehrung gehemmt und/oder durch die anti-adhäsiv wirksamen Substanzen an der Anhaftung behindert werden sind vorzugsweise ausgewählt aus humanpathogenen Spezies der Klassen Ascomycota, Basidiomycota, Deuteromycota und Zygomycota, insbesondere aus allen Spezies der Gattungen Aspergillus, Penicillium, Cladosporium und Mucor, aus den humanpathogenen Formen von Candida sowie *Stachybotrys, Phoma, Alternaria, Aureobasidium, Ulocladium, Epicoccum, Stemphyllium, Paecilomyces, Trichoderma, Scopulariopsis, Wallemia, Botrytis, Verticillium und Chaetonium.*

Zu den Ascomycota gehören hier insbesondere alle Spezies der Gattungen Aspergillus, Penicillium und Cladosporium. Diese Pilze bilden Sporen aus, die bei Kontakt mit der Haut oder den Atemwegen ein stark allergieauslösendes Potential aufweisen. Zu den Basidiomycota ist beispielsweise Cryptococcus neoformans zu zählen. Zu den Deuteromycota sind alle als Schimmelpilze bekannten Gattungen zu zählen, insbesondere solche, die durch das Fehlen eines sexuellen Stadiums nicht den Klassen Ascomycota, Basidiomycota oder Zygomycota zugeordnet werden.

Besonders bevorzugt handelt es sich bei den Pilzen um Spezies der Gattung Aspergillus, insbesondere um Spezies, die ausgewählt sind unter Aspergillus aculeatus, Aspergillus albus, Aspergillus alliaceus, Aspergillus asperescens, Aspergillus awamori, Aspergillus candidus, Aspergillus carbonarius, Aspergillus carneus, Aspergillus chevalieri, Aspergillus chevalieri var. intermedius, Aspergillus clavatus, Aspergillus ficuum, Aspergillus flavipes, Aspergillus flavus, Aspergillus foetidus, Aspergillus fumigatus, Aspergillus giganteus, Aspergillus humicola, Aspergillus intermedius, Aspergillus japonicus, Aspergillus nidulans, Aspergillus niger, Aspergillus niveus, Aspergillus ochraceus, Aspergillus oryzae, Aspergillus ostianus, Aspergillus parasiticus, Aspergillus parasiticus var. globosus, Aspergillus penicillioides, Aspergillus phoenicis, Aspergillus rugulosus, Aspergillus sclerotiorum, Aspergillus sojae var. gymnosardae, Aspergillus sydowi, Aspergillus tamarii, Aspergillus terreus, Aspergillus terricola, Aspergillus toxicarius, Aspergillus unguis, Aspergillus ustus, Aspergillus versicolor, Aspergillus vitricolae und Aspergillus wentii, wobei *Aspergillus flavus* und *Aspergillus nidulans* ganz besonders bevorzugt sind.

### Ausführungsbeispiele

### Mikrobiologische Beurteilung:

A) Die mikrobiologische Beurteilung zwecks Unterscheidung der langfristigen Hemmung des Schimmelpilzwachstums von ausgehärteten Silikondichtmassen-Formulierungen ist mit folgenden Verfahren möglich:
A1 Alterung der Silikonmassen im QUV - Schnellbewitterungsgerät Ausgehärtete Silikonfilme (ca. 80 x 60 x 5 mm) werden in einem QUV - Schnellbewitterungsgerät (z.B. Modell QUV-Spray) im Wechsel jeweils 15 Minuten mit einer Sprühlösung (2%ige wässrigeTexapon NSO Lösung mit 0,5% Entschäumer Dehydran 1513) besprüht, dann 15 Minuten mit UV-Licht bestrahlt. Pro Woche werden die Prüfkörper mit 198 Sprüheinheiten und 198 UV-Einheiten belastet. Nach 4 (792 Duschzylken), 8 (1584 Duschzylken) und 12 Wochen (2376 Duschzylken) werden Prüfkörper für die mikrobiologische Prüfung entnommen. Ebenfalls wird eine unbewitterte Probe mikrobiologisch untersucht.
A2 Mikrobiologische Prüfung: praxisnaher Test zur Filmkonservierung in Anlehnung an DIN EN ISO846
   Die Beurteilung der Pilzbeständigkeit ausgehärteter Fugendichtungsmassen erfolgt in Anlehnung an die DIN EN ISO 846: "Bestimmung der Einwirkung von Mikroorganismen auf Kunststoffe (ISO 846:1997 Deutsche Fassung EN ISO 846: 1997); (verändert).
   Prüfkörper ausgehärteter Fugendichtmassen werden plan auf eine Agaroberfläche aufgebracht. Die Prüfkörper und die umgebende Agaroberfläche werden mit einer Pilzsuspension beaufschlagt. Nach Inkubation wird das Wachstum auf und um die Prüfkörper herum beurteilt.

Prüfbedingungen: Folgende wichtige Änderungen bzw. Ergänzungen zur DIN EN ISO 846 werden durchgeführt:
(1) Die Prüfmuster werden gem. DIN EN ISO 846 ohne Vorbehandlung geprüft. Zusätzlich werden Prüfmuster auch nach Vorbehandlung im Test beurteilt. Diese Vorbehandlung (Auslaugung) kann z.B. durch mehrwöchige Inkubation in einem Durchflusstauchbad mit Wasser od. durch Einlagerung geeigneter Prüfmuster in einem QUV erfolgen;
(2) Die Bebrütung der Pilzsporensuspension erfolgt unter härteren, praxisnahen Bedingungen bei erhöhter Raumluftfeuchte (ca. 85 % rel. Luftfeuchte) in einer feuchten Kammer;
(3) Die Inkubation der Prüfmuster erfolgt auf ,vollständigem Nährboden' (vergl. DIN EN ISO 846 4.2.1.2 Verfahren B), aber mit ,Würze-Agar';
(4) Als Testorganismen werden entweder die in der DIN EN ISO 846 vorgesehenen Prüfpilze:
   *Aspergillus niger* ATCC 6275
   *Penicillium funiculosum* ATCC 36839
   *Paecilomyces variotii* ATCC 18502
   *Gliocladium virens* ATCC 9645
   *Chaetomium globosum* ATCC 6205
   verwendet oder alternativ der Stamm *Aspergillus niger* (ATCC 6275) als alleiniger Testorganismus.

Bewertung des Wachstums auf den Prüfkörpern:
0 = kein Wachstum bei mikroskopischer Betrachtung erkennbar
1 = kein Wachstum mit bloßem Auge, aber unter dem Mikroskop klar erkennbar
2 = Wachstum mit bloßem Auge erkennbar, bis zu 25% der Probenoberfläche bewachsen
3 = Wachstum mit bloßem Auge erkennbar, bis zu 50% der Probenoberfläche bewachsen
4 = beträchtliches Wachstum, über 50% der Probenoberfläche bewachsen
5 = starkes Wachstum, ganze Probenoberfläche bewachsen

Insgesamt werden die Muster 18 Wochen bebrütet und jeweils nach 4 und 8 Wochen erneut beimpft. Die einzelnen Bewertungen werden über diesen Zeitraum addiert und zusammenfassend als Befall-Index dargestellt.

### B) Antiadhäsive Wirkung

Als Beispiel wird der Nachweis der anti-adhäsiven Wirkung von nichtionischen Tensiden nach Einarbeitung in Fugendichtungsmassen beschrieben.

Es wurde die Silicondichtmasse DC3390 verwendet. Es wurde 1 Gew.-% Tensid hinzugegeben und im Speedmixer homogenisiert. Als nichtionische Tenside wurden die Tenside C₉-Alkylphenyl-(EO)₉ (Disponil NP9, Cognis), C₁₂-C₁₄-Alkyl-(EO)₅-(PO)₄ (Dehyppon LS54, Cognis) und F(CF₂CF₂)₁₋₇CH₂CH₂O(CH₂CH₂O)₁₋₁₅H (Zonyl FSO 100, Dupont) in die Fugendichtungsmasse eingearbeitet und mit Fugendichtungsmassen ohne Tensid-Zusatz verglichen. Die erhaltene Masse wurde als Film (22 x 22 x 2 mm) verstrichen und an der Luft härten gelassen. Der so erhaltene Prüfkörper wurde mit 70 % Ethanol 10 Minuten desinfiziert, anschließend mit destilliertem Wasser gewaschen und getrocknet. Anschließend wurden die Prüfkörper mit einer Keimsuspension von Aspergillus niger überschichtet und für eine Stunde inkubiert. Danach wurde die Keimsuspension abgesaugt und der Prüfkörper zweimal gewaschen. Nach dem Überführen der Prüfkörper in sterile 6-Well-Platten wurden die Keimträger mit Würzeagar+INT überschichtet. Anschließend erfolgte nach 48 Stunden Inkubation bei 25°C die Bestimmung der Anzahl der Koloniebildenden Einheiten (KBE). Durch den Einsatz nichtionischer Tenside und insbesondere bei Verwendung fluorierter nichtionischer Tenside konnte eine deutliche Reduktion der Anzahl Koloniebildender Einheiten erreicht werden.

### C) Sporulationshemmende Wirkung

Als Beispiel wird der Nachweis der Hemmung der asexuellen Vermehrung durch ortho-Phenylphenol und ortho-Phenylphenol-Kieselsäureester in Fugendichtungsmassen beschrieben.

Kontamination der Oberfläche von Würzeagarplatten mit je 100 µl einer Keimsuspension (10³ KBE/ml) von Aspergillus niger (DSM1988). Den Agarplatten wurden zuvor unterschiedliche Mengen Wirkstoff (Lösungen in Ethanol, Endkonzentrationen siehe Tabelle) beigefügt. Die Platten wurden 3 Tage bei 25°C inkubiert. Die Sporenbildung wurde visuell beurteilt und die Sporulationsrate in [%] bestimmt. Die eingesetzten Wirkstoffkonzentrationen behinderten das Wachstum, sofern dies nicht in den u.g. Tabellen angezeigt wird, des Prüfstamms nicht. Eine wachstumshemmende bzw. keimtötende Wirkung trat erst bei einer Konzentration von 0,05 Gew.-% OPP auf. Die Sporenbildung wurde aber bereits bei einer fünfzigfach niedrigeren Konzentration an OPP vollständig unterdrückt, ohne dass eine wachstumshemmende Wirkung auftrat.

**Tabelle 1: ortho-Phenylphenol**

| | | | | | | | | | | |
|---|---|---|---|---|---|---|---|---|---|---|
| Konzen tration OPP [%] | 0 | 0,00001 | 0,00005 | 0,0001 | 0,0005 | 0,001 | 0,005 | 0,05 | 0,1 | 1,0 |
| Sporula tion [%] | 100 | 95 | 95 | 85 | 10 | 0 | 0 | Kein Wachs tum | Kein Wachs tum | Kein Wachs tum |

Die Sporenbildung wurde mit steigenden Konzentrationen gehemmt und bei 0,001 Gew.-% Einsatzkonzentration vollständig unterdrückt.

**Tabelle 2: ortho-Phenylphenol-Kieselsäureester**

| | | | | | | | | |
|---|---|---|---|---|---|---|---|---|
| Konzentration OPP-Kieselsäureester [%] | 0 | 0,00001 | 0,00005 | 0,0001 | 0,0005 | 0,001 | 0,005 | 0,01 |
| Sporulation [%] | 100 | 95 | 95 | 95 | 50 | 25 | 0 | 0 |

Die Sporenbildung wurde mit steigenden Konzentrationen gehemmt und bei 0,005 Gew.-% Einsatzkonzentration vollständig unterdrückt.

### D) Fungizide Wirkung von Azol-Derivaten

Als Beispiel für die fungizide Wirkung von Azol-Derivaten wird der Nachweis der fungiziden Wirkung von Tebuconazol in Fugendichtungsmassen beschrieben. Zum Vergleich wurde der Einsatz des üblicherweise verwendeten Fungizids DCOIT geprüft.

Eine handelsübliche Silikon-Fugendichtmasse (z.B. Dow Corning 3390) wird mit den beschriebenen Wirkstoffen versetzt und mit einem Rührer bis zur Homogenität verrührt. Anschließend werden Filme der Dichtmasse hergestellt wie oben beschrieben geprüft.

| Wirkstoff | Zusatzmenge Wirkstoff | Befall-Index |
|---|---|---|
| - | - | 80 |
| DCOIT | 500ppm | 77 |
| | 1000ppm | 81 |
| | 2000ppm | 78 |
| | | |
| Tebuconazol | 500ppm | 60 |
| | 1000ppm | 57 |
| | 2500ppm | 37 |
| | 5000ppm | 20 |
| | 10000ppm | 12 |

### Beispielrezepturen für Tapetenkleister

| Inhaltsstoffe | Menge |
|---|---|
| Methylhydroxyethylcellulose (300 m • Pas in 2 %iger wässriger Lösung, Methoxylgehalt 26 %) | 500 g |
| PVAcetat-Redispersionspulver | 350 g |
| Kaolin | 60 g |
| Cellulosepulver | 50 g |
| Additionsprodukt von 6 Mol Ethylenoxid an 1 Mol Nonylphenol | 10 g |
| Handelsüblicher Konservierungsstoff (Basis Isothiazolinderivat) | 8 g |
| ortho-Phenylphenol | 0,1 g |
| Tebuconazol | 5 g |
| Eumulgin B1 | 1 g |

| Inhaltsstoffe | Menge |
|---|---|
| Methylhydroxyethylcellulose (5000 m • Pas in 2 % wässrige Lösung, Methoxylgehalt 19 %) | 680 g |
| Carboxylmethylstärke (DS 0,22) | 300 g |
| Additionsprodukt von 4 Mol Ethylenoxid an 1 Mol Fettalkohol | 15g |
| Handelsüblicher Konservierungsstoff (Basis Isothialzolinderivat) | 10g |
| ortho-Phenylphenol | 0,1 g |
| Tebuconazol | 5 g |
| Eumulgin B1 | 1 g |

| Inhaltsstoffe | Menge |
|---|---|
| Handelsübliche Polyvinylacetatdispersionenen (50 % Feststoffgehalt) | 500 g |
| Wasser | 200 g |
| Methylhydroxyethylcellulose (3000 m • Pas in 2 % wässriger Lösung) | 20 g |
| Handelsübliches Konservierungsmittel | 10g |
| ortho-Phenylphenol | 0,1 g |
| Tebuconazol | 5 g |
| Eumulgin B1 | 1 g |

Die erhaltenen Mischungen werden mit Wasser im Verhältnis 1:20 (2) oder 1:25 (3) oder 1:1 (4) angerührt und zum Aufkleben von handelsüblichen Tapeten auf Wandflächen benutzt.

## Patentansprüche

1. Verwendung von 0,1 bis 1 Gew.-% mindestens einer Azol-Verbindung, ausgewählt aus Propiconazol, Thiabendazol und Tebuconazol und/oder ihren Derivaten, 0,0001 bis 0,05 Gew.-% mindestens eines Sporulationsinhibitors, ausgewählt aus ortho-Phenylphenol und ortho-Phenylphenol-Kieselsäureester, und 0,001 bis 10 Gew.-% mindestens einer anti-adhäsiv wirksamen Substanz, ausgewählt aus nichtionischen Tensiden und Kieselsäureestern davon, zur Ausrüstung von Materialien ausgewählt aus Baustoffen, Bauhilfsstoffen, Filtermedien, Textilien, Pelzen, Papier, Fellen und Leder.

2. Verwendung nach Anspruch 1, **dadurch gekennzeichnet, dass** der Baustoff oder Bauhilfsstoff ausgewählt ist aus Klebe-, Dichtungs-, Spachtel- und Anstrichmassen, Klebstoffen, Kunststoffen, Lacken, Farben, Putz, Mörtel, Estrich, Beton, Isoliermaterialien und Grundierungen.

3. Verwendung nach Anspruch 2, **dadurch gekennzeichnet, dass** es sich bei der Dichtungsmasse um eine Fugendichtungsmasse handelt.

4. Verwendung nach Anspruch 2 oder 3, **dadurch gekennzeichnet, dass** es sich bei der Dichtungsmasse um eine Dichtungsmasse auf Silikon-Basis handelt.

5. Verwendung nach Anspruch 4, **dadurch gekennzeichnet, dass** die Dichtungsmasse auf Silikon-Basis ausgewählt ist aus Acetat-, Alkoxy-, Oxim-, Benzamid- und Amin-Silikonen.

6. Verwendung nach einem der Ansprüche 1 bis 5, **dadurch gekennzeichnet, dass** mindestens eine Substanz ausgewählt aus Azol-Verbindung, Sporulationsinhibitor und anti-adhäsiv wirksamer Substanz in Träger-gebundener Form eingesetzt wird.

7. Materialien ausgewählt aus Filtermedien, Baustoffen, Bauhilfsstoffen, Textilien, Pelzen, Papier, Fellen oder Leder, **dadurch gekennzeichnet, dass** sie 0,1 bis 1 Gew.-% mindestens einer Azol-Verbindung, ausgewählt aus Propiconazol, Thiabendazol und Tebuconazol und/oder ihren Derivaten und/oder Träger-gebundenen Formen dieser Substanzen, 0,0001 bis 0,05 Gew.-% mindestens eines Sporulationsinhibitors, ausgewählt aus ortho-Phenylphenol und ortho-Phenylphenol-Kieselsäureester, und 0,001 bis 10 Gew.-% mindestens einer anti-adhäsiv wirksamen Substanz, ausgewählt aus nichtionischen Tensiden oder Kieselsäureester davon, enthalten.

8. Materialien nach Anspruch 7, **dadurch gekennzeichnet, dass** es sich bei dem nichtionischen Tensid um Eumulgin B1 oder um einen Eumulgin B1-Kieselsäureester handelt.

## Claims

1. Use of 0.1 to 1 wt% of at least one azole compound, selected from propiconazole, tiabendazole, and tebuconazole and/or derivatives thereof, 0.0001 to 0.05 wt% of at least one sporulation inhibitor, selected from *ortho*-phenylphenol and *ortho*-phenylphenol silicic acid ester, and 0.001 to 10 wt% of at least one anti-adhesive substance, selected from nonionic surfactants and silicic acid esters thereof, to equip materials selected from construction materials, auxiliary construction materials, filter media, textiles, pelts, paper, furs, and leather.

2. The use according to claim 1, **characterized in that** the construction material or auxiliary construction material is selected from adhesive masses, sealing masses, fillers, coating masses, adhesives, plastics, lacquers, paints, plaster, mortar, screed, concrete, insulating materials, and primers.

3. The use according to claim 2, **characterized in that** the sealing mass is a joint-sealing mass.

4. The use according to claim 2 or 3, **characterized in that** the sealing mass is a silicone-based sealing mass.

5. The use according to claim 4, **characterized in that** the silicone-based sealing mass is selected from acetate silicones, alkoxy silicones, oxime silicones, benzamide silicones, and amine silicones.

6. The use according to one of claims 1 to 5, **characterized in that** at least one substance selected from azole compound, sporulation inhibitor, and anti-adhesive substance is used in carrier-bound form.

7. Materials selected from filter media, construction materials, auxiliary construction materials, textiles, pelts, paper, furs, or leather, **characterized in that** said materials contain 0.1 to 1 wt% of at least one azole compound, selected from propiconazole, tiabendazole, and tebuconazole and/or derivatives thereof and/or carrier-bound forms of these substances, 0.0001 to 0.05 wt% of at least one sporulation inhibitor, selected from *ortho*-phenylphenol and *ortho*-phenylphenol silicic acid ester, and 0.001 to 10 wt% of at least one anti-adhesive substance, selected from nonionic surfactants or silicic acid esters thereof.

8. The materials according to claim 7, **characterized in that** the nonionic surfactant is Eumulgin B1 or an Eumulgin B1 silicic acid ester.

## Revendications

1. Utilisation de 0,1 à 1% en poids d'au moins un composé azole choisi parmi le propiconazole, le thiabendazole et le tébuconazole et/ou leurs dérivés, de 0,0001 à 0,05% en poids d'au moins un inhibiteur de sporulation choisi parmi l'ortho-phénylphénol et l'ester d'acide silicique de l'ortho-phénylphénol, et de 0,001 à 10% en poids d'au moins une substance antiadhésive choisie parmi les tensioactifs non ioniques et leurs esters d'acide silicique, pour la finition de matières choisies parmi les matériaux de construction, les auxiliaires de construction, les milieux filtrants, les textiles, les fourrures, le papier, les peaux et cuirs.

2. Utilisation selon la revendication 1, **caractérisée en ce que** le matériau de construction ou l'auxiliaire de construction est choisi parmi les matières d'adhésivité, d'étanchéité, d'enduction et de revêtement, les adhésifs, les matières plastiques, les peintures, les colorants, le plâtre, le mortier, la chape, le béton, les matériaux isolants et les apprêts.

3. Utilisation selon la revendication 2, **caractérisée en ce que** la matière d'étanchéité est une matière d'étanchéité pour joints.

4. Utilisation selon la revendication 2 ou 3, **caractérisée en ce que** la matière d'étanchéité est une matière d'étanchéité à base de silicone.

5. Utilisation selon la revendication 4, dans laquelle la matière d'étanchéité à base de silicone est choisie parmi l'acétate-silicone, l'alcoxy-silicone, l'oxime-silicone, le benzamide-silicone et l'amine-silicone.

6. Utilisation selon l'une des revendications 1 à 5, **caractérisée en ce qu'**au moins une substance choisie parmi le composé azole, l'inhibiteur de sporulation et la substance active antiadhésive est utilisée sous une forme liée à un support.

7. Matières choisies par les milieux filtrants, les matériaux de construction, les auxiliaires de construction, les textiles, les fourrures, le papier, les peaux ou cuirs, **caractérisées en ce qu'**elles contiennent de 0,1 à 1% en poids d'au moins un composé azole choisi parmi le propiconazole, le thiabendazole et le tébuconazole et/ou leurs dérivés et/ou leurs formes liées à un support, de 0,0001 à 0,05% en poids d'au moins un inhibiteur de sporulation choisi parmi l'ortho-phénylphénol et l'ester d'acide silicique de l'ortho-phénylphénol, et de 0,001 à 10% en poids d'au moins une substance antiadhésive choisie parmi les tensioactifs non ioniques et leurs esters d'acide silicique.

8. Matières selon la revendication 7, **caractérisées en ce que** le tensioactif non ionique est une Eumulgine B1 un ester d'acide silicique de l'Eumulgine B1.
